# EUROPEAN PATENT SPECIFICATION

(11) **EP 4 147 882 B1**
(45) Date of publication and mention of the grant of the patent: **26.02.2025**
(21) Application number: 22189777.0
(22) Date of filing: 10.08.2022
(51) Int. Cl.: B60C 1/00, C08L 7/00, C08L 9/06, B60C 11/00, B60C 11/03, B60C 11/04, B60C 11/12, C08F 236/06, C08F 236/10

(54) **TIRE**
REIFEN
PNEUMATIQUE

(30) Priority: 10.09.2021 JP 2021148206
(43) Date of publication of application: 15.03.2023
(73) Proprietor: Sumitomo Rubber Industries, Ltd., Kobe-shi, Hyogo-ken 651-0072 (JP)
(72) Inventor: SAWADA, Jun, Kobe-shi, Hyogo, 651-0072 (JP)
(74) Representative: Manitz Finsterwald Patent- und Rechtsanwaltspartnerschaft mbB

(56) References cited:
- EP-A1- 3 950 381
- JP-A- 2012 111 795
- US-A1- 2014 275 331

## Description

### TECHNICAL FIELD

The present invention relates to a tire.

### BACKGROUND OF THE INVENTION

In recent years, due to growing concern about the environment, there has been a strong demand for reduction of rolling resistance of a tire. A technique of using an isoprene-based rubber for a tread part of a tire to reduce rolling resistance is known (JP 2021-025006).

### SUMMARY OF THE INVENTION

However, the isoprene-based rubber has characteristics of being easily deteriorated by heat or ozone and is also affected by self-heating particularly when running at a high speed, and therefore the rubber of the tread is more likely to cure than the rubber on the inner side. For this reason, there is a problem that a difference in rigidity occurs between the rubber of the tread and the rubber inside the tread, impairing steering stability at a high-speed running.

It is an object of the present invention to maintain steering stability at a high-speed running in a tire comprising a tread part of two or more rubber layers comprising an isoprene-based rubber.

As a result of intensive studies in view of the above-described problem, the present inventor has found that the above-described problem can be solved by, in a tire comprising a tread part comprising at least a first rubber layer of a tread surface and a second rubber layer adjacent to inside the first rubber layer in a tire radial direction where both the first rubber layer and the second rubber layer comprise an isoprene-based rubber, setting an acetone extraction content of the first rubber layer to be 25% by mass or less, setting an amine amount B in the acetone extraction content of the second rubber layer to be 10.00% by mass or more, making A and the B to satisfy B>A where the A means an amine amount (% by mass) in the acetone extraction content of the first rubber layer, and setting a rate of change E of complex elastic moduli E* of the first rubber layer before and after an ozone deterioration test for the tire to be 30% or less, and conducted further studies to complete the present invention.

That is, the present invention relates to a tire as follows:
A tire comprising a tread part, the tread part comprising at least a first rubber layer of a tread surface and a second rubber layer adjacent to inside the first rubber layer in a tire radial direction,
wherein the first rubber layer is composed of a rubber composition comprising a rubber component comprising an isoprene-based rubber and has an acetone extraction content of 25% by mass or less, preferably 20% by mass or less, more preferably 15% by mass or less,
wherein the second rubber layer is composed of a rubber composition comprising a rubber component comprising an isoprene-based rubber and has an amine amount B of 10.00% by mass or more, preferably 12.00% by mass or more, more preferably 15.00% by mass or more, in the acetone extraction content,
wherein, when an amine amount (% by mass) in the acetone extraction content of the first rubber layer is defined as A, the A and the B satisfy B>A, preferably B/A≥1.1, more preferably B/A≥1.5, further preferably B/A≥2.0, and
wherein a rate of change E of complex elastic moduli E* of the rubber composition of the first rubber layer before and after an ozone deterioration test for the tire is 30% or less, preferably 28% or less, more preferably 26% or less,
wherein the acetone extraction content, the amine amount in the acetone extraction content and the rate of change E of complex elastic moduli E* of the rubber composition of the first rubber layer before and after an ozone deterioration are determined by the methods described herein.

According to the present invention, in a tire in which a tread part comprises two or more rubber layers comprising an isoprene-based rubber, steering stability at a high-speed running can be maintained.

### BRIEF DESCRIPTION OF THE DRAWINGS

FIG. 1 is an example of a tread pattern of the tire of the present invention.
FIG. 2 is an example of the tread pattern of the tire of the present invention.

### DETAILED DESCRIPTION

The present invention relates to a tire comprising a tread part, the tread part comprising at least a first rubber layer of a tread surface and a second rubber layer adjacent to inside the first rubber layer in a tire radial direction, wherein the first rubber layer is composed of a rubber composition comprising a rubber component comprising an isoprene-based rubber and has an acetone extraction content of 25% by mass or less, wherein the second rubber layer is composed of a rubber composition comprising a rubber component comprising an isoprene-based rubber and has an amine amount B of 10.00% by mass or more in the acetone extraction content, wherein, when an amine amount (% by mass) in the acetone extraction content of the first rubber layer is defined as A, the A and the B satisfy B>A, and wherein a rate of change E of complex elastic moduli E* of the rubber composition of the first rubber layer before and after an ozone deterioration test for the tire is 30% or less.

Although it is not intended to be bound by theory, the following can be considered as a mechanism for maintaining steering stability at a high speed in the tire of the present invention. That is, the acetone extraction content is a component that can move between the first rubber layer and the second rubber layer, and the amine contained therein can also move between the first rubber layer and the second rubber layer. However, by making an amine concentration in the acetone extraction content in the second rubber layer higher than that in the first rubber layer, transfer of amine from the first rubber layer to the second rubber layer is suppressed, and further, supply of amine from the second rubber layer to the first rubber layer is also expected. In this way, if the amine concentration in the acetone extraction content in the first rubber layer is maintained, curing of the first rubber layer that is always in contact with a road surface and is easily cured by excessive thermosetting is suppressed, and as a result, a difference in rigidity between the first rubber layer and the second rubber layer is also suppressed. As such, it is considered that deterioration of steering stability at a high speed becomes less likely to occur, which is maintained.

The rubber component of the second rubber layer preferably comprises 45% by mass or more of an isoprene-based rubber. This is because, by compounding a large amount of isoprene-based rubber having a low polarity in the second rubber layer, an effect of promoting transfer of amine in the second rubber layer to the first rubber layer can be expected.

The rubber component of the first rubber layer preferably comprises 12.5% by mass or more of an isoprene-based rubber. This is because the isoprene-based rubber is easily deteriorated by heat or ozone, and therefore, if the first rubber layer comprises a large amount of isoprene-based rubber, effects of the present invention become more easily exhibited.

When the rubber composition of the first rubber layer comprises an antioxidant, a content (% by mass) of the antioxidant in the rubber composition being defined as C, and the rubber composition of the second rubber layer comprises an antioxidant, a content (% by mass) of the antioxidant in the rubber composition being defined as D, it is preferable that D≥C is satisfied. This is because transfer of the antioxidant from the second rubber layer to the first rubber layer can be expected, and the similar effects as that of the present invention can be expected.

The E is preferably 25% or less. This is because the effects of the present invention are more strongly exhibited.

It is preferable that the A and the B satisfy B-A≥5.00. This is because the effects of the present invention become more easily exhibited.

It is preferable that the C and the D satisfy D-C≥0.50. This is because the effects of the present invention become more easily exhibited.

It is preferable that a ratio F of a thickness of the second rubber layer to a thickness of the entire tread is 10 to 50% at a position of a tire center line of the tread part. This is because when the ratio of the thickness of the second rubber layer is equal to or more than a predetermined value in the entire tread, it is advantageous in terms of supplying amine to the first rubber layer, while on the other hand, when the ratio is not more than the predetermined value, steering stability becomes good.

It is preferable that the A, the B, and the F satisfy (B-A) × F≥30. This is because when the values of (B-A) and F are controlled with each other so as not to fall below a predetermined value, respectively, suppression of the difference in rigidity between the first rubber layer and the second rubber layer and contribution to steering stability by suppressing the thickness of the second rubber layer cooperate with each other, and the effects of the present invention become easily obtained.

The rubber component of the first rubber layer preferably comprises a styrene-butadiene rubber. This is because the styrene-butadiene rubber can be expected to have an effect of improving grip performance.

The rubber component of the second rubber layer preferably comprises a butadiene rubber. This is because the butadiene rubber can be expected to have an effect of improving abrasion resistance.

The tread pattern of the tread surface comprises a circumferential main groove, the circumferential main groove at least comprising an outer circumferential main groove that is placed, in at least one of two half tread regions divided by the tire center line, on an outer side of the tire when mounted on a vehicle, and an inner circumferential main groove provided inside the outer circumferential main groove, and when a groove width (mm) of the outer circumferential main groove is defined as G and a groove width (mm) of the inner circumferential main groove is defined as **H,** it is preferable that the G and the H satisfy H<G. This is because when the tire touches a wet road surface, water on the road surface makes its way for flowing from the tire center line to outside in a tire width direction, so that, by widening the groove width of the outer circumferential main groove which contributes drainage performance, wet performance is improved, which may contribute to maintenance of steering stability.

It is preferable that the G, the H, and the E satisfy (H/G) × E≤25. This is because when the values of H/G and E are controlled with each other so as not to become equal to or more than a predetermined value, respectively, contribution to steering stability by improving wet performance and contribution to steering stability by suppressing the difference in rigidity cooperate with each other, and the effects of the present invention become easily obtained.

When a region having a width corresponding to 50% of a tread grounding width with the tire center line centered is defined as a center area, in the tread pattern of the tread surface, a plurality of sipes are formed in a land part included in the center area, and an angle I formed between a longitudinal direction of the sipe and a tire width direction is preferably 8° or more and less than 45°. This is because when the angle of the sipe is within the above-described range, a pattern rigidity of the tire can be increased and uneven abrasion resistance in the center area can be improved, which may therefore contribute to maintenance of steering stability.

It is preferable that the A, the B, and the I satisfy (B-A)/I≥0.20. This is because when the values of (B-A) and I are controlled with each other so as not to fall below a predetermined value, respectively, suppression of the difference in rigidity between the first rubber layer and the second rubber layer and improvement of uneven abrasion resistance in the center area cooperate with each other, and the effects of the present invention become easily obtained.

In the present invention, numerical values of upper limits and lower limits relating to "or more", "or less", and "to" for descriptions of numerical ranges are numerical values that can be arbitrarily combined, and additionally, numerical values in Examples can be combined with the upper limits and the lower limits. In addition, when a numerical range is specified by using "to", it means to include numerical values of both ends, unless otherwise specified. Furthermore, in the present invention, the numerical range shown to include the values of ends is interpreted as simultaneously showing a numerical range not including the values of ends as well, unless contrary to the purpose of the present invention.

### <Definition>

A "standardized rim" is a rim defined for each tire in a standard system including a standard, on which the tire is based, by the standard, i.e., a "standard rim" in JATMA, "Design Rim" in TRA, or "Measuring Rim" in ETRTO.

A "standardized internal pressure" is an air pressure defined for each tire in a standard system including a standard, on which the tire is based, by the standard, i.e., a "MAXIMUM AIR PRESSURE" in JATMA, the maximum value described in Table "TIRE LOAD LIMITS AT VARIOUS COLD INFLATION PRESSURES" in TRA, or "INFLATION PRESSURE" in ETRTO.

A "standardized state" is a state where the tire is rim-assembled on a standardized rim, a standardized internal pressure is filled, and no load is applied. Besides, in the present specification, a dimension and an angle of each part of a tire are measured in the above-described standardized state, unless otherwise specified. In a case where there are patterns or characters on the side of the tire, the measurement is conducted as if there are no such patterns or characters.

A "standardized load" is a load defined for each tire in a standard system including a standard, on which the tire is based, by the standard, i.e., a "MAXIMUM LOAD CAPACITY" in JATMA, the maximum value described in Table "TIRE LOAD LIMITS AT VARIOUS COLD INFLATION PRESSURES" in TRA, or "LOAD CAPACITY" in ETRTO.

A "tread grounding end" is the outermost grounding position in a tire width direction when a standardized load is applied to the tire in a standardized state and the tire touches a flat surface at a camber angle of 0 degree, which includes an outer grounding end (To) that becomes an outer side of the tire and an inner grounding end (Ti) that becomes an inner side of the tire, when mounted on a vehicle.

A "circumferential groove" refers to a groove extending continuously in a tire circumferential direction and having a width of 3.0 mm or more on a tread surface.

The "sipe" refers to a lateral groove having a width of less than 2.0 mm on a tread surface and in which an edge component in a tire width direction is larger than an edge component in a tire circumferential direction.

The "thickness of the entire tread" means a total thickness of rubber layers of the tread part, and refers to the shortest distance from a tread surface to a belt layer at a position of a tire center line in a meridian cross section of a tire. If there is a groove on the tread surface on the tire center line, it is determined such that the groove does not exist. The same applies to the "thickness of the first rubber layer" and the "thickness of the second rubber layer" of the tread part.

### <Measuring method>

### (Amount of acetone extraction content (AE amount))

An amount of acetone extraction content (acetone extraction amount) can be calculated by the following equation by immersing each vulcanized rubber specimen in acetone for 72 hours to extract a soluble component and measuring a mass of each specimen before and after extraction in accordance with JIS K 6229: Acetone extraction amount (%) = {(mass of rubber specimen before extraction - mass of rubber specimen after extraction) / (mass of rubber specimen before extraction)} × 100

### (Amine amount)

An amine amount (%) in the acetone extraction content is measured according to JIS K 6220-3:2001 "8. Measuring Method of Purity by High Performance Liquid Chromatography (HPLC)". In this case, a reverse phase HPLC used shall be equipped with a differential refraction detector instead of an ultraviolet absorption detector, and the amine amount is calculated by the following equation: Amine amount (%) in acetone extraction content = (peak area of peak detected in 6PPD detection time) / (peak area of all detected peaks) × 100 (Here, 6PPD is N-phenyl-N'-(1,3-dimethylbutyl)-p-phenylenediamine, and the 6PPD detection time is a detection time when the maximum peak is detected in measuring 6PPD having a purity of 95% or more in advance on the same condition as for measurement of an acetone extract.)

### (Ozone deterioration test)

In accordance with JIS K 6259, a specimen of a predetermined size is subjected to a reciprocating motion for 48 hours under a condition of a frequency of the reciprocating motion of 0.5 ± 0.025 Hz, an ozone concentration of 50 ± 5 pphm, a test temperature of 40°C, and a tensile strain of 20 ± 2%, to perform a dynamic ozone deterioration test.

### (Complex elastic modulus)

A viscoelasticity measurement sample having a length of 20 mm, a width of 4 mm, and a thickness of 1 mm is collected from inside a first rubber layer of a tread part of each test tire so that a tire circumferential direction is on a long side, and using Eplexor series manufactured by gabo Systemtechnik GmbH, a complex elastic modulus E* is measured under a condition of a temperature at 30°C, an initial strain of 5%, a dynamic strain of 1%, a frequency of 10 Hz, and an extension mode. Besides, a thickness direction of a sample is defined as a tire radial direction.

A "styrene content" is a value calculated by ¹H-NMR measurement, and is applied to, for example, a rubber component having a repeating unit derived from styrene such as a SBR.

A "vinyl content (1,2-bond butadiene unit amount)" is a value calculated by infrared absorption spectrometry according to JIS K 6239-2:2017, and is applied to, for example, a rubber component having a repeating unit derived from butadiene such as a SBR and a BR.

A "cis content (cis-1,4-bond content)" is a value calculated by infrared absorption spectrometry according to JIS K 6239-2:2017, and is applied to, for example, a rubber component having a repeating unit derived from butadiene such as a BR.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, and the like.

A "N₂SA of carbon black" is measured according to JIS K 6217-2:2017.

A "DBP oil absorption amount of carbon black" is measured according to JIS K 6217-4:2017.

A "N₂SA of silica" is measured by the BET method according to ASTM D3037-93.

### <Tire>

The tire of the present invention has a tread part comprising at least a first rubber layer of a tread surface and a second rubber layer adjacent to inside the first rubber layer in a tire radial direction. The tread part may comprise rubber layers other than the first rubber layer and the second rubber layer. That is, the tread part consists of at least two layers, but by having a further rubber layer inside the second rubber layer, it may consist of three layers or more layers.

### (First rubber layer)

The first rubber layer is composed of a rubber composition comprising a rubber component comprising an isoprene-based rubber and has an acetone extraction content of 25.0% by mass or less. If the acetone extraction content is more than 25% by mass, an amount of a component that can move between the rubber layers becomes too large, which is not preferable. The amount of the acetone extraction content of the first rubber layer is preferably 20.0% by mass or less, more preferably 15.0% by mass or less. A lower limit of the amount of the acetone extraction content is not particularly limited, and may be, for example, about 5.0% by mass.

When the amine amount (% by mass) in the acetone extraction content is defined as A, the amine amount A is preferably 30.00% by mass or less. The amine amount A is preferably 25.00% by mass or less, more preferably 20.00% by mass or less, further preferably 15.00% by mass or less, further preferably 13.00% by mass or less, further preferably 11.00% by mass or less, further preferably 10.00% by mass or less. A lower limit of the amine amount A is not particularly limited, but may be, for example, about 5.00% by mass.

### (Second rubber layer)

The second rubber layer is composed of a rubber composition comprising a rubber component comprising an isoprene-based rubber and has an amine amount B of 10.00% by mass or more in the acetone extraction content. If the amine amount B in the acetone extraction content is less than 10.00% by mass, an amount of amine supplied to the first rubber layer becomes small, which is not preferable. The amine amount B is preferably 12.00% by mass or more, more preferably 15.00% by mass or more. An upper limit of the amine amount B is not particularly limited, but may be, for example, about 30.00% by mass.

### (Amine amount)

The amine amount A and the amine amount B satisfy B>A. That is, the amine amount B in the second rubber layer is larger than the amine amount A in the first rubber layer. As a result, transfer of amine from the first rubber layer to the second rubber layer is suppressed, and further, supply of amine from the second rubber layer to the first rubber layer is also expected. In addition, if the amine concentration in the acetone extraction content in the first rubber layer is maintained, curing of the first rubber layer that is always in contact with a road surface and is easily cured by excessive thermosetting is suppressed, and as a result, a difference in rigidity between the first rubber layer and the second rubber layer is also suppressed.

A B/A value is preferably 1.10 or more, more preferably 1.50 or more, further preferably 2.00 or more. An upper limit of the B/A value is not particularly limited, and may be, for example, about 5.00.

In the present invention, "amine" according to the amine amount refers to a compound quantified by the above-described measuring method of the amine amount.

### (Complex elastic modulus E*)

For the complex elastic moduli E* of the rubber composition of the first rubber layer, a rate of change E before and after the ozone deterioration test is 30% or less. If the rate of change E exceeds 30%, curing of the first rubber layer easily proceeds, which is not preferable. The rate of change E is preferably 28% or less, more preferably 26% or less, further preferably 25% or less, further preferably 22% or less. The lower the rate of change E is, the better it is, but it may be about 15% to 20%. The rate of change preferably means a rate of increase before and after the ozone deterioration test.

### (Content of antioxidant)

In one embodiment, the rubber composition of the first rubber layer and the rubber composition of the second rubber layer each comprises an antioxidant, and when a content (% by mass) of the antioxidant in the rubber composition of the first rubber layer is defined as C and a content (% by mass) of the antioxidant in the rubber composition of the second rubber layer is defined as D, D≥C is satisfied. As a result, transfer of the antioxidant from the first rubber layer to the second rubber layer is suppressed, and further, supply of the antioxidant from the second rubber layer to the first rubber layer is also expected. The antioxidant is preferably an amine-based antioxidant.

A D/C value is preferably 1.50 or more, more preferably 2.00 or more, further preferably 2.40 or more. An upper limit of the D/C value is not particularly limited, and may be, for example, about 5.00.

### (B-A)

In one embodiment, it is preferable that the A and the B satisfy B-A≥5.00 from the viewpoint of suppressing curing of the first rubber layer. A B-A value is more preferably 7.00 or more, further preferably 10.00 or more, further preferably 11.00 or more, further preferably 13.00 or more. An upper limit of the B-A value is not particularly limited, and may be, for example, about 20.00.

### (D-C)

In one embodiment, it is preferable that the C and the D satisfy D-C≥0.50 from the viewpoint of maintaining a content of the antioxidant in the first rubber layer. A D-C value is more preferably 0.80 or more, further preferably 1.10 or more, further preferably 1.30 or more, further preferably 1.50 or more. An upper limit of the D-C value is not particularly limited, and may be, for example, about 5.00.

### (Thickness of second rubber layer)

In one embodiment, it is preferable that a ratio F of a thickness of the second rubber layer to a thickness of the entire tread is preferably 10 to 50% at the position of the tire center line of the tread part. The F value is more preferably 15% or more, further preferably 20% or more. On the other hand, the F value is more preferably 40% or less, further preferably 30% or less.

### ((B-A) × F)

In one embodiment, it is preferable that the A, the B, and the F satisfy (B-A) × F≥30. A value of (B-A) × F is preferably 40 or more, more preferably 50 or more, further preferably 60 or more. An upper limit of the value of (B-A) × F is not particularly limited, and may be, for example, about 350 to 400.

### (Groove width of circumferential main groove)

In one embodiment, the tread pattern of the tread surface comprises a circumferential main groove, the circumferential main groove at least comprising an outer circumferential main groove that is placed, in at least one of two half tread regions divided by the tire center line, on an outer side of the tire when mounted on a vehicle, and an inner circumferential main groove provided inside the outer circumferential main groove, and when a groove width (mm) of the outer circumferential main groove is defined as G and a groove width (mm) of the inner circumferential main groove is defined as **H,** it is preferable that the G and the H satisfy H<G from the viewpoint of improving wet performance. Here, the circumferential main groove refers to one having a groove width of 3 mm or more in the tire width direction. The groove width when it changes in the tire circumferential direction means an average value of groove widths measured at a plurality of points including the maximum value and the minimum value.

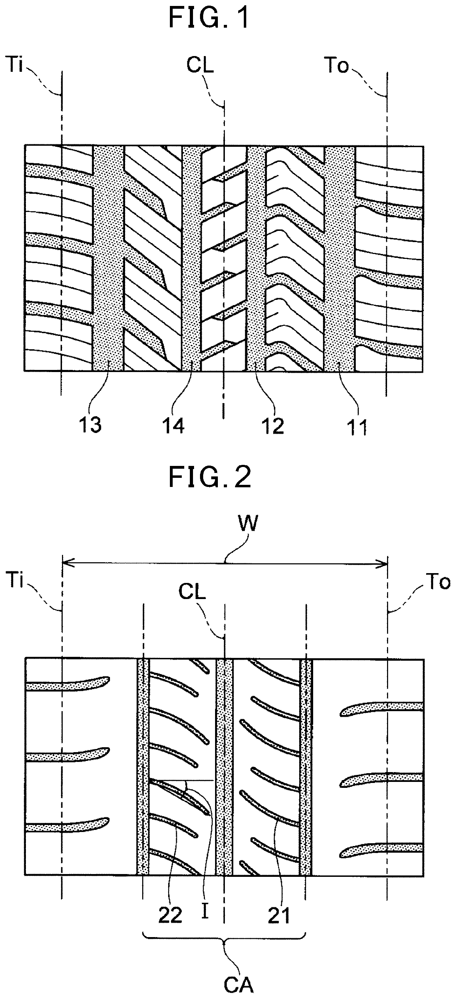

FIG. 1 shows an example of the tread pattern. In FIG. 1, an outer circumferential groove 11 and an inner circumferential groove 12 are provided in a half tread region that becomes an outer side of the tire when mounted on a vehicle, of two half tread regions divided by the tire center line CL. Moreover, an outer circumferential groove 13 and an inner circumferential groove 14 are provided in a half tread region that becomes an inner side of the tire when mounted on the vehicle. In addition, the outer circumferential groove 11 has a wider groove width than the inner circumferential groove 12, and the outer circumferential groove 13 has a wider groove width than the inner circumferential groove 14.

The H/G value is preferably 0.99 or less, more preferably 0.80 or less, further preferably 0.70 or less. The H/G value is preferably 0.30 or more, more preferably 0.40 or more, further preferably 0.50 or more.

### ((H/G) × E)

In one embodiment, it is preferable that the G, the **H,** and the E satisfy (H/G) × E≤25. A value of (H/G) × E is preferably 24 or less, more preferably 23 or less, further preferably 22 or less. A lower limit of the value of (H/G) × E is not particularly limited, and may be, for example, about 1 to 3.

### (Angle of sipe)

In one embodiment, when a region having a width corresponding to 50% of a tread grounding width with a tire center line centered is defined as a center area, in the tread pattern of the tread surface, a plurality of sipes are formed in a land part included in the center area, and an angle I formed between a longitudinal direction of the sipe and a tire width direction is preferably 8° or more and less than 45°.

FIG. 2 shows an example of the tread pattern. In FIG. 2, a region having a width corresponding to 50% of a tread grounding width W with a tire center line CL centered is shown as a center area CA. In the center area CA, a sipe 21 is formed on the To side thereof, and a sipe 22 is formed on the Ti side thereof. Here, the angle I formed between the longitudinal direction of the sipe and the tire width direction refers to an angle (°) formed between a straight line connecting both ends of the sipe in the longitudinal direction and the tire width direction.

The sipe may be curved or bent. In FIG. 2, the sipe is curved. Moreover, it is preferable that at least one end of the sipe communicates with the circumferential main groove. This is because contribution to steering stability on a wet road surface can be further expected.

A value of the angle I is preferably 10° or more, more preferably 15° or more, further preferably 20° or more. The value of the angle I is preferably 43° or less, more preferably 41° or less, further preferably 40° or less.

### ((B-A)/I)

In one embodiment, it is preferable that the A, the B, and the I satisfy (B-A)/I≥0.20. A value of (B-A)/I is preferably 0.21 or more, more preferably 0.22 or more, further preferably 0.30 or more. A lower limit of the value of (B-A)/I is not particularly limited, and may be, for example, about 1.00 to 0.80.

### <Rubber composition for first rubber layer>

### (Rubber component)

The rubber component used in the rubber composition for the first rubber layer comprises an isoprene-based rubber. As other rubber components, diene-based rubbers such as a styrene-butadiene rubber (SBR), a butadiene rubber (BR), and an acrylonitrile-butadiene rubber (NBR), as well as non-diene-based rubbers such as a hydrogenated nitrile rubber (HNBR), an ethylene propylene rubber, a silicone rubber, a fluororubber (FKM), an acrylic rubber (ACM), and a hydrin rubber can be used. These rubber components may be used alone, or two or more thereof may be used in combination. As other rubber components, a SBR or a BR is preferable, a SBR is further preferable, or a SBR and a BR can be used in combination.

### <<Isoprene-based rubber>>

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination. The NR is not particularly limited, and those common in the tire industry can be used, examples of which include, for example, SIR20, RSS#3, TSR20, and the like.

The NR is not particularly limited, and those common in the tire industry such as SIR20, RSS#3, and TSR20 can be used.

A content of the isoprene-based rubber in 100% by mass of the rubber component is preferably 12.5% by mass or more, more preferably 15.0% by mass or more, further preferably 20.0% by mass or more, from the viewpoint of the present invention. The content is preferably 50% by mass or less, more preferably 40% by mass or less, further preferably 35% by mass or less.

### <<Styrene-butadiene rubber>>

Examples of the SBR include, but not particularly limited to, an emulsion-polymerized SBR (E-SBR), a solution-polymerized SBR (S-SBR), and the like, and those obtained by modifying these SBRs with a modifying agent (modified SBRs), hydrogenated ones of these SBRs (hydrogenated SBRs), and the like can also be used. The SBR may be used alone, or two or more thereof may be used in combination.

A styrene content of the SBR is preferably 18% by mass or more, more preferably 20% by mass or more, further preferably 23% by mass or more, from the viewpoint of grip performance. The styrene content is preferably 50% by mass or less, more preferably 45% by mass or less, further preferably 42% by mass or less, from the viewpoint of the effects of the present invention. The styrene content is a value calculated by ¹H-NMR measurement.

A vinyl bond amount of the SBR is preferably 10 mol% or more, more preferably 13 mol% or more, further preferably 15 mol% or more, from the viewpoints of rubber strength and abrasion resistance. The vinyl bond amount is preferably 65 mol% or less, more preferably 60 mol% or less, further preferably 58 mol% or less, from the viewpoint of the effects of the present invention. The vinyl content is a value calculated by infrared absorption spectrometry according to JIS K 6239-2:2017.

A weight-average molecular weight (Mw) of the SBR is preferably 200,000 or more, more preferably 300,000 or more. Moreover, the Mw is preferably 2,000,000 or less, more preferably 1,500,000 million or less, further preferably 1,000,000 or less. The Mw of the SBR can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

Moreover, the modified SBRs may be those modified at a main chain and/or a terminal thereof with a modifying agent or those modified with a polyfunctional modification agent such as, for example, a tin tetrachloride and a silicon tetrachloride and partially having a branched structure. Among them, those modified with a modifying agent having a functional group that interacts with silica at a main chain and/or a terminal thereof are particularly preferable. Examples of such a modifying agent include alkoxysilane and the like.

Examples of the SBR include those manufactured and sold by JSR Corporation, Sumitomo Chemical Co., Ltd., Ube Industries, Ltd., Asahi Kasei Corporation, ZS Elastomer Co., Ltd., etc.

A content of the SBR when compounded in 100% by mass of the rubber component is preferably 40% by mass or more, more preferably 50% by mass or more, further preferably 60% by mass or more, from the viewpoint of wet grip performance. The content is preferably 90% by mass or less, more preferably 88% by mass or less, further preferably 85% by mass or less, from the viewpoints of abrasion resistance and rolling resistance.

### <<Butadiene rubber>>

The BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). The BR may be used alone, or two or more thereof may be used in combination. Among them, it is more preferable to use a high cis BR from the viewpoint of abrasion resistance.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. The Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

Examples of the high cis BR include, for example, high cis BRs manufactured and sold by JSR Corporation, Zeon Corporation, Ube Industries, Ltd., etc., and the like. Among high cis BRs, those having a cis 1,4-bond content of 95% or more are preferable, those having a cis 1,4 bond content of 97% or more are more preferable, and those having a cis 1,4 bond content of 98% or more are further preferable. The cis content (cis-1,4-bond content) is a value calculated by infrared absorption spectrometry according to JIS K 6239-2:2017.

A content of the BR when compounded in 100% by mass of the rubber component is preferably 5% by mass or more, more preferably 10% by mass or more, further preferably 15% by mass or more, from the viewpoints of abrasion resistance and rolling resistance. The content is preferably 50% by mass or less, more preferably 45% by mass or less, further preferably 40% by mass or less, from the viewpoint of wet grip performance.

### (Filler)

Examples of a filler include silica, carbon black, and the like. Besides, those conventionally used in the tire industry such as, carbon black, calcium carbonate, alumina, clay, and talc can be compounded. Among them, silica and/or carbon black is preferable. The filler can be used alone, or two or more thereof can be used in combination.

### <<Silica>>

Examples of silica include, for example, a dry silica (anhydrous silica), a wet silica (hydrous silica), and the like. Among them, a wet silica is preferable since it has many silanol groups and many reaction points with a silane coupling agent. Silica may be used alone, or two or more thereof may be used in combination. Examples of silica include, for example, silica manufactured and sold by Evonik Degussa GmbH, Solvay, Tosoh Silica Corporation, Tokuyama Corporation, etc.

A N₂SA (BET specific surface area) of silica is preferably 130 m²/g or more, more preferably 150 m²/g or more, further preferably 170 m²/g or more, from the viewpoint of abrasion resistance. The BET specific surface area is preferably 500 m²/g or less, more preferably 300 m²/g or less, further preferably 270 m²/g or less, further preferably 250 m²/g or less, from the viewpoint of processability. The N₂SA of silica is measured by the BET method according to ASTM D3037-93.

A content of silica based on 100 parts by mass of the rubber component is preferably 20 parts by mass or more, more preferably 30 parts by mass or more, further preferably 40 parts by mass or more, from the viewpoint of reinforcing property. The content is preferably 120 parts by mass or less, more preferably 110 parts by mass or less, further preferably 100 parts by mass or less, from the viewpoint of processability.

### <<Silane coupling agent>>

When silica is compounded, it is preferable to use a silane coupling agent. Examples of the silane coupling agent include, for example, sulfide-based silane coupling agents such as bis(3-triethoxysilylpropyl)disulfide and bis(3-triethoxysilylpropyl)tetrasulfide, mercapto-based silane coupling agents such as 3-mercaptopropyltrimethoxysilane and 3-mercaptopropyltriethoxysilane, thioether-based silane coupling agents such as 3-octanoylthio-1-propyltriethoxysilane, 3-hexanoylthio-1-propyltriethoxysilane, and 3-octanoylthio-1-propyltrimethoxysilane, vinyl-based silane coupling agents such as vinyltriethoxysilane, amino-based silane coupling agents such as 3-aminopropyltriethoxysilane, glycidoxy-based silane coupling agents such as γ-glycidoxypropyltriethoxysilane, nitro-based silane coupling agents such as 3-nitropropyltrimethoxysilane, and chloro-based silane coupling agents such as 3-chloropropyltrimethoxysilane. They may be used alone, or two or more thereof may be used in combination. Among them, sulfide-based coupling agents, particularly bis(3-triethoxysilylpropyl)disulfide are preferable from the viewpoints of ease of temperature control of reaction with silica and an effect of improving reinforcing property of a rubber composition.

When the rubber composition comprises a silane coupling agent, a content of the silane coupling agent is preferably 1 part by mass or more, more preferably 2 parts by mass or more, based on 100 parts by mass of silica from the viewpoint of processability. The content is preferably 20 parts by mass or less, more preferably 15 parts by mass or less, from the viewpoint of a compounding effect commensurate with the cost.

### <<Carbon black>>

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N351H, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. Carbon black may be used alone, or two or more thereof may be used in combination.

Examples of carbon black include carbon black manufactured and sold by Asahi Carbon Co., Ltd., Cabot Japan K.K., Tokai Carbon Co., Ltd., Mitsubishi Chemical Corporation, Lion Corporation, Nippon Steel Chemical Carbon Co., Ltd., Columbian Carbon Japan Ltd., etc.

A nitrogen adsorption specific surface area (N₂SA) of carbon black is preferably 80 m²/g or more, more preferably 100 m²/g or more, further preferably 110 m²/g or more. Moreover, the N₂SA is preferably 300 m²/g or less, more preferably 250 m²/g or less. The "N₂SA of carbon black" is measured according to JIS K 6217-2:2017.

A DBP oil absorption amount of carbon black is preferably 50 mL/100 g or more, more preferably 80 mL/100 g or more, further preferably 100 mL/100 g or more, particularly preferably 110 mL/100 g or more, from the viewpoint of abrasion resistance. The DBP oil absorption amount is preferably 250 mL/100 g or less, more preferably 200 mL/100 g or less, further preferably 135 mL/100 g or less, from the viewpoint of grip performance. The DBP oil absorption amount of carbon black is measured according to JIS K6217-4:2017.

A content of carbon black when compounded based on 100 parts by mass of the rubber component is preferably 1 part by mass or more, more preferably 5 parts by mass or more, and on the other hand, it is preferably 50 parts by mass or less, more preferably 30 parts by mass or less, more preferably 10 parts by mass or less, based on 100 parts by mass of the rubber component, from the viewpoints of good fuel efficiency and weather resistance.

### (Other compounding agents)

The rubber composition for the first rubber layer can appropriately comprise compounding agents commonly used in the conventional tire industry, such as, for example, a softening agent, a tackifying resin, an antioxidant, wax, zinc oxide, stearic acid, a vulcanizing agent, and a vulcanization accelerator, if necessary, in addition to the above-described components.

### <<Softening agent>>

Examples of the softening agent include oil and the like. Examples of oil include, for example, a process oil such as a paraffin-based, aroma-based, and naphthene-based process oil. A content of oil when compounded based on 100 parts by mass of the rubber component is preferably 5 parts by mass or more, more preferably 7 parts by mass or more, further preferably 10 parts by mass or more. Moreover, the content of oil is preferably 60 parts by mass or less, more preferably 55 parts by mass or less, further preferably 50 parts by mass or less, based on 100 parts by mass of the rubber component. When the content of oil is within the above-described ranges, an effect of compounding oil can be sufficiently obtained, and a good abrasion resistance can be obtained. Besides, in the present specification, the content of oil also includes an amount of oil contained in an oil-extended rubber.

Other examples of the softening agent include a liquid polymer, a low-temperature plasticizer, and the like. Examples of the liquid polymer include, for example, a liquid SBR, a liquid BR, a liquid IR, a liquid SIR, and the like. Among them, it is particularly preferable to use a liquid SBR because it can improve durability and grip performance with a good balance. Examples of the low-temperature plasticizer include, for example, liquid components such as dioctyl phthalate (DOP), dibutyl phthalate (DBP), tris(2-ethylhexyl)phosphate (TOP), and bis(2-ethylhexyl)sebacate (DOS). The softening agent can be used alone, or two or more thereof can be used in combination.

### <<Tackifying resin>>

Examples of the tackifying resin include a cyclopentadiene-based resin, a coumarone resin, a petroleum-based resin (an aliphatic petroleum resin, an aromatic-based petroleum resin, an alicyclic petroleum resin, etc.), a phenol-based resin, a rosin derivative, and the like. The tackifying resin may be used alone, or two or more thereof may be used in combination.

Examples of the aromatic-based petroleum resin include, for example, an aromatic vinyl-based resin, and a C9-based petroleum resin and the like other than the aromatic vinyl-based resin. As an aromatic vinyl monomer (unit) for the aromatic vinyl-based resin, for example, styrene, α-methylstyrene, 1-vinylnaphthalene, 3-vinyltoluene, ethylvinylbenzene, divinylbenzene, 4-cyclohexylstyrene, 2,4,6-trimethylstyrene, and the like are used, which may be any of a homopolymer of each monomer and a copolymer of two or more kinds of monomers. Moreover, those obtained by modifying them may be used.

A content of the tackifying resin when compounded based on 100 parts by mass of the rubber component is preferably 1 part by mass or more, more preferably 2 parts by mass or more, further preferably 3 parts by mass or more, from the viewpoints of wet grip performance and dry grip performance. Moreover, the content of the tackifying resin, particularly the aromatic vinyl-based resin, based on 100 parts by mass of the rubber component is preferably 30 parts by mass or less, more preferably 20 parts by mass or less, further preferably 15 parts by mass or less, from the viewpoints of abrasion resistance, fuel efficiency, and brittle fracture at a low temperature.

### <<Antioxidant>>

The antioxidant is not particularly limited, and for example, amine-based, phenol-based, and imidazole-based compounds, and antioxidants such as a carbamic acid metal salt can be appropriately selected and compounded as antioxidants. These antioxidants may be used alone, or two or more thereof may be used in combination. Among them, an amine-based antioxidant is preferable because it has a high antiaging effect. Further, p-phenylenediamine-based antioxidants are more preferable such as N-phenyl-N'-(1,3-dimethylbutyl)-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine. Among them, N-phenyl-N'-(1,3-dimethylbutyl)-p-phenylenediamine is particularly preferable.

As the antioxidant, a so-called reactive antioxidant can be used. Examples of the reactive antioxidant include, for example, N-phenyl-N'-(3-methacryloyloxy-2-hydroxypropyl)-p-phenylenediamine and the like.

A content of the antioxidant when compounded based on 100 parts by mass of the rubber component is preferably 0.5 parts by mass or more, more preferably 1 part by mass or more, from the viewpoint of the effects of the present invention. The content is preferably 5 parts by mass or less, more preferably 4 parts by mass or less, further preferably 3 parts by mass or less.

### <<Wax, zinc oxide, stearic acid>>

Those conventionally used in the tire industry can be used.

Examples of wax include, for example, a petroleum-based wax, a mineral-based wax, a synthetic wax, and the like. A content of wax when compounded based on 100 parts by mass of the rubber component is preferably 0.3 parts by mass or more, more preferably 0.7 part by mass or more, further preferably 0.8 parts by mass or more, from the viewpoint of the effects of the present invention. The content is preferably 3.0 parts by mass or less, more preferably 2.5 parts by mass or less, further preferably 2.0 parts by mass or less.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10.0 parts by mass or less, more preferably 5.0 parts by mass or less, from the viewpoint of abrasion resistance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

### <<Vulcanizing agent>>

The rubber composition can comprise a vulcanizing agent. As the vulcanizing agent, an organic peroxide or a sulfur-based vulcanizing agent can be used. As the organic peroxide, for example, benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexin-3, 1,3-bis(t-butylperoxypropyl)benzene, or the like can be used. Moreover, as the sulfur-based vulcanizing agent, for example, sulfur, morpholine disulfide, or the like can be used. The vulcanizing agent may be used alone, or two or more thereof may be used in combination. Among them, sulfur is preferable.

A content of the vulcanizing agent when compounded based on 100 parts by mass of the rubber component is 0.5 parts by mass or more, preferably 1 part by mass or more, from the viewpoint of abrasion resistance. Moreover, the content is 5 parts by mass or less, preferably 3 parts by mass or less.

### <<Vulcanization accelerator>>

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and guanidine-based vulcanization accelerators are preferable from the viewpoint that the effects of the present invention can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, it is preferable to use CBS and DPG in combination from the viewpoint that the effects of the present invention can be obtained more appropriately.

A content of the vulcanization accelerator when compounded based on 100 parts by mass of the rubber component is preferably 0.5 parts by mass or more, more preferably 1.0 part by mass or more, further preferably 1.5 parts by mass or more, from the viewpoint of abrasion resistance. The content is preferably 8 parts by mass or less, more preferably 7 parts by mass or less, further preferably 6 parts by mass or less.

### <Rubber composition for second rubber layer>

### (Rubber component)

The rubber component used in the rubber composition for the second rubber layer comprises an isoprene-based rubber. As other rubber components, diene-based rubbers such as a styrene-butadiene rubber (SBR), a butadiene rubber (BR), and an acrylonitrile-butadiene rubber (NBR), as well as non-diene-based rubbers such as a hydrogenated nitrile rubber (HNBR), an ethylene propylene rubber, a silicone rubber, a fluororubber (FKM), an acrylic rubber (ACM), and a hydrin rubber can be used. These rubber components may be used alone, or two or more thereof may be used in combination. As other rubber components, a SBR or a BR is preferable, a BR is further preferable, or a SBR and a BR can be used in combination.

### <<Isoprene-based rubber>>

As an isoprene-based rubber, for example, those common in the tire industry can be used, such as an isoprene rubber (IR) and a natural rubber. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, and a grafted natural rubber, and the like. These isoprene-based rubbers may be used alone, or two or more thereof may be used in combination. The NR is not particularly limited, and those common in the tire industry can be used, examples of which include, for example, SIR20, RSS#3, TSR20, and the like.

The NR is not particularly limited, and those common in the tire industry such as SIR20, RSS#3, and TSR20 can be used.

A content of the isoprene-based rubber in 100% by mass of the rubber component is preferably 45% by mass or more, more preferably 50% by mass or more, further preferably 55% by mass or more, from the viewpoint of the present invention. The content is preferably 90% by mass or less, more preferably 85% by mass or less, further preferably 80% by mass or less.

### <<Styrene-butadiene rubber>>

Examples of the SBR include, but not particularly limited to, an emulsion-polymerized SBR (E-SBR), a solution-polymerized SBR (S-SBR), and the like, and those obtained by modifying these SBRs with a modifying agent (modified SBRs), hydrogenated ones of these SBRs (hydrogenated SBRs), and the like can also be used. The SBR may be used alone, or two or more thereof may be used in combination.

A styrene content of the SBR is preferably 18% by mass or more, more preferably 20% by mass or more, further preferably 23% by mass or more, from the viewpoint of the effects of the present invention. The styrene content is preferably 50% by mass or less, more preferably 45% by mass or less, further preferably 42% by mass or less, from the viewpoint of the effects of the present invention. The styrene content is a value calculated by ¹H-NMR measurement.

A vinyl bond amount of the SBR is preferably 10 mol% or more, more preferably 13 mol% or more, further preferably 15 mol% or more, from the viewpoint of the effects of the present invention. The vinyl bond amount is preferably 65 mol% or less, more preferably 60 mol% or less, further preferably 58 mol% or less, from the viewpoint of the effects of the present invention. The vinyl content is a value calculated by infrared absorption spectrometry according to JIS K 6239-2:2017.

A weight-average molecular weight (Mw) of the SBR is preferably 200,000 or more, more preferably 300,000 or more. Moreover, the Mw is preferably 2,000,000 or less, more preferably 1,500,000 million or less, further preferably 1,000,000 or less. The Mw of the SBR can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

Moreover, the modified SBRs may be those modified at a main chain and/or a terminal thereof with a modifying agent or those modified with a polyfunctional modification agent such as, for example, a tin tetrachloride and a silicon tetrachloride and partially having a branched structure. Among them, those modified with a modifying agent having a functional group that interacts with silica at a main chain and/or a terminal thereof are particularly preferable. Examples of such a modifying agent include alkoxysilane and the like.

Examples of the SBR include those manufactured and sold by JSR Corporation, Sumitomo Chemical Co., Ltd., Ube Industries, Ltd., Asahi Kasei Corporation, ZS Elastomer Co., Ltd., etc.

A content of the SBR when compounded in 100% by mass of the rubber component is preferably 40% by mass or more, more preferably 50% by mass or more, further preferably 60% by mass or more, from the viewpoint of wet grip performance. The content is preferably 90% by mass or less, more preferably 88% by mass or less, further preferably 85% by mass or less, from the viewpoints of abrasion resistance and rolling resistance.

### <<Butadiene rubber>>

The BR is not particularly limited, and those common in the tire industry can be used such as, for example, a BR having a cis 1,4 bond content of less than 50% (a low cis BR), a BR having a cis 1,4 bond content of 90% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). The BR may be used alone, or two or more thereof may be used in combination. Among them, it is more preferable to use a high cis BR from the viewpoint of abrasion resistance.

Examples of the high cis BR include, for example, high cis BRs manufactured and sold by JSR Corporation, Zeon Corporation, Ube Industries, Ltd., etc., and the like. Among high cis BRs, those having a cis 1,4-bond content of 95% or more are preferable, those having a cis 1,4 bond content of 97% or more are more preferable, and those having a cis 1,4 bond content of 98% or more are further preferable. The cis content (cis-1,4-bond content) is a value calculated by infrared absorption spectrometry according to JIS K 6239-2:2017.

A weight-average molecular weight (Mw) of the BR is preferably 300,000 or more, more preferably 350,000 or more, further preferably 400,000 or more, from the viewpoints of abrasion resistance and grip performance, etc. Moreover, it is preferably 2,000,000 or less, more preferably 1,000,000 or less, from the viewpoints of cross-linking uniformity, etc. The Mw can be calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

A content of the BR when compounded in 100% by mass of the rubber component is preferably 5% by mass or more, more preferably 10% by mass or more, further preferably 15% by mass or more, from the viewpoints of abrasion resistance and rolling resistance. The content is preferably 50% by mass or less, more preferably 45% by mass or less, further preferably 40% by mass or less, from the viewpoint of wet grip performance.

### (Filler)

Examples of a filler include silica, carbon black, and the like. Besides, those conventionally used in the tire industry such as, carbon black, calcium carbonate, alumina, clay, and talc can be compounded. Among them, silica and/or carbon black is preferable. The filler can be used alone, or two or more thereof can be used in combination.

### <<Silica>>

Examples of silica include, for example, a dry silica (anhydrous silica), a wet silica (hydrous silica), and the like. Among them, a wet silica is preferable since it has many silanol groups and many reaction points with a silane coupling agent. Silica may be used alone, or two or more thereof may be used in combination. Examples of silica include, for example, silica manufactured and sold by Evonik Degussa GmbH, Solvay, Tosoh Silica Corporation, Tokuyama Corporation, etc.

A N₂SA (BET specific surface area) of silica is preferably 130 m²/g or more, more preferably 150 m²/g or more, further preferably 170 m²/g or more, from the viewpoint of abrasion resistance. The BET specific surface area is preferably 500 m²/g or less, more preferably 300 m²/g or less, further preferably 270 m²/g or less, further preferably 250 m²/g or less, from the viewpoint of processability. The N₂SA of silica is measured by the BET method according to ASTM D3037-93.

A content of silica when compounded based on 100 parts by mass of the rubber component is preferably 20 parts by mass or more, more preferably 30 parts by mass or more, further preferably 40 parts by mass or more, from the viewpoint of reinforcing property. The content is preferably 120 parts by mass or less, more preferably 110 parts by mass or less, further preferably 100 parts by mass or less, from the viewpoint of processability.

### <<Silane coupling agent>>

When silica is compounded, it is preferable to use a silane coupling agent. Examples of the silane coupling agent include, for example, sulfide-based silane coupling agents such as bis(3-triethoxysilylpropyl)disulfide and bis(3-triethoxysilylpropyl)tetrasulfide, mercapto-based silane coupling agents such as 3-mercaptopropyltrimethoxysilane and 3-mercaptopropyltriethoxysilane, thioether-based silane coupling agents such as 3-octanoylthio-1-propyltriethoxysilane, 3-hexanoylthio-1-propyltriethoxysilane, and 3-octanoylthio-1-propyltrimethoxysilane, vinyl-based silane coupling agents such as vinyltriethoxysilane, amino-based silane coupling agents such as 3-aminopropyltriethoxysilane, glycidoxy-based silane coupling agents such as γ-glycidoxypropyltriethoxysilane, nitro-based silane coupling agents such as 3-nitropropyltrimethoxysilane, and chloro-based silane coupling agents such as 3-chloropropyltrimethoxysilane. They may be used alone, or two or more thereof may be used in combination. Among them, sulfide-based coupling agents, particularly bis(3-triethoxysilylpropyl)disulfide are preferable from the viewpoints of ease of temperature control of reaction with silica and an effect of improving reinforcing property of a rubber composition.

When the rubber composition comprises a silane coupling agent, a content of the silane coupling agent is preferably 1 part by mass or more, more preferably 2 parts by mass or more, based on 100 parts by mass of silica, from the viewpoint of processability. The content is preferably 20 parts by mass or less, more preferably 15 parts by mass or less, from the viewpoint of a compounding effect commensurate with the cost.

### <<Carbon black>>

Carbon black is not particularly limited, and those common in the tire industry can be used such as GPF, FEF, HAF, ISAF, and SAF, and specifically, N110, N115, N120, N125, N134, N135, N219, N220, N231, N234, N293, N299, N326, N330, N339, N343, N347, N351, N351H, N356, N358, N375, N539, N550, N582, N630, N642, N650, N660, N683, N754, N762, N765, N772, N774, N787, N907, N908, N990, N991, and the like can be appropriately used, and in-house synthesized products and the like can also be appropriately used. Carbon black may be used alone, or two or more thereof may be used in combination.

Examples of carbon black include carbon black manufactured and sold by Asahi Carbon Co., Ltd., Cabot Japan K.K., Tokai Carbon Co., Ltd., Mitsubishi Chemical Corporation, Lion Corporation, Nippon Steel Chemical Carbon Co., Ltd., Columbian Carbon Japan Ltd., etc.

A nitrogen adsorption specific surface area (N₂SA) of carbon black is preferably 40 m²/g or more, more preferably 50 m²/g or more, further preferably 60 m²/g or more. Moreover, the N₂SA is preferably 130 m²/g or less, more preferably 80 m²/g or less. The "N₂SA of carbon black" is measured according to JIS K 6217-2:2017.

A DBP oil absorption amount of carbon black is preferably 50 mL/100 g or more, more preferably 80 mL/100 g or more, further preferably 100 mL/100 g or more, particularly preferably 110 mL/100 g or more, from the viewpoint of abrasion resistance. The DBP oil absorption amount is preferably 250 mL/100 g or less, more preferably 200 mL/100 g or less, further preferably 135 mL/100 g or less, from the viewpoint of grip performance. Besides, the DBP oil absorption amount of carbon black is measured according to JIS K 6217-4:2017.

A content of carbon black when compounded based on 100 parts by mass of the rubber component is preferably 1 part by mass or more, more preferably 5 parts by mass or more, and on the other hand, it is preferably 100 parts by mass or less, more preferably 80 parts by mass or less, more preferably 60 parts by mass or less, based on 100 parts by mass of the rubber component, from the viewpoints of good fuel efficiency and weather resistance.

### (Other compounding agents)

The rubber composition for the first rubber layer can appropriately comprise compounding agents commonly used in the conventional tire industry, such as, for example, a softening agent, a tackifying resin, an antioxidant, wax, zinc oxide, stearic acid, a vulcanizing agent, and a vulcanization accelerator, if necessary, in addition to the above-described components.

### <<Softening agent>>

Examples of the softening agent include oil and the like. Examples of oil include, for example, a process oil such as a paraffin-based, aroma-based, and naphthene-based process oil. A content of oil when compounded based on 100 parts by mass of the rubber component is preferably 5 parts by mass or more, more preferably 7 parts by mass or more, further preferably 10 parts by mass or more. Moreover, the content of oil is preferably 60 parts by mass or less, more preferably 55 parts by mass or less, further preferably 50 parts by mass or less, based on 100 parts by mass of the rubber component. When the content of oil is within the above-described ranges, an effect of compounding oil can be sufficiently obtained, and a good abrasion resistance can be obtained. Besides, in the present specification, the content of oil also includes an amount of oil contained in an oil-extended rubber.

Other examples of the softening agent include a liquid polymer, a low-temperature plasticizer, and the like. Examples of the liquid polymer include, for example, a liquid SBR, a liquid BR, a liquid IR, a liquid SIR, and the like. Among them, it is particularly preferable to use a liquid SBR because it can improve durability and grip performance with a good balance. Examples of the low-temperature plasticizer include, for example, liquid components such as dioctyl phthalate (DOP), dibutyl phthalate (DBP), tris(2-ethylhexyl)phosphate (TOP), and bis(2-ethylhexyl)sebacate (DOS). The softening agent can be used alone, or two or more thereof can be used in combination.

### <<Tackifying resin>>

Examples of the tackifying resin include a cyclopentadiene-based resin, a coumarone resin, a petroleum-based resin (an aliphatic petroleum resin, an aromatic-based petroleum resin, an alicyclic petroleum resin, etc.), a phenol-based resin, a rosin derivative, and the like. The tackifying resin may be used alone, or two or more thereof may be used in combination.

Examples of the aromatic-based petroleum resin include, for example, an aromatic vinyl-based resin, and a C9-based petroleum resin and the like other than the aromatic vinyl-based resin. As an aromatic vinyl monomer (unit) for the aromatic vinyl-based resin, for example, styrene, α-methylstyrene, 1-vinylnaphthalene, 3-vinyltoluene, ethylvinylbenzene, divinylbenzene, 4-cyclohexylstyrene, 2,4,6-trimethylstyrene, and the like are used, which may be any of a homopolymer of each monomer and a copolymer of two or more kinds of monomers. Moreover, those obtained by modifying them may be used.

A content of the tackifying resin when compounded based on 100 parts by mass of the rubber component is preferably 1 part by mass or more, more preferably 2 parts by mass or more, further preferably 3 parts by mass or more, from the viewpoints of wet grip performance and dry grip performance. Moreover, the content of the tackifying resin, particularly the aromatic vinyl-based resin, based on 100 parts by mass of the rubber component is preferably 30 parts by mass or less, more preferably 20 parts by mass or less, further preferably 15 parts by mass or less, from the viewpoints of abrasion resistance, fuel efficiency, and brittle fracture at a low temperature.

### <<Antioxidant>>

The antioxidant is not particularly limited, and for example, amine-based, phenol-based, and imidazole-based compounds, and antioxidants such as a carbamic acid metal salt can be appropriately selected and compounded as antioxidants. These antioxidants may be used alone, or two or more thereof may be used in combination. Among them, an amine-based antioxidant is preferable because it has a high antiaging effect. Further, p-phenylenediamine-based antioxidants are more preferable such as N-phenyl-N'-(1,3-dimethylbutyl)-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine. Among them, N-phenyl-N'-(1,3-dimethylbutyl)-p-phenylenediamine is particularly preferable.

A content of the antioxidant when compounded based on 100 parts by mass of the rubber component is preferably 0.5 parts by mass or more, more preferably 1 part by mass or more, from the viewpoint of the effects of the present invention. The content is preferably 8 parts by mass or less, more preferably 6 parts by mass or less, further preferably 5 parts by mass or less.

### <<Wax, zinc oxide, stearic acid>>

Those conventionally used in the tire industry can be used.

Examples of wax include, for example, a petroleum-based wax, a mineral-based wax, a synthetic wax, and the like. A content of wax when compounded based on 100 parts by mass of the rubber component is preferably 0.3 parts by mass or more, more preferably 0.7 part by mass or more, further preferably 0.8 parts by mass or more, from the viewpoint of the effects of the present invention. The content is preferably 3.0 parts by mass or less, more preferably 2.5 parts by mass or less, further preferably 2.0 parts by mass or less.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10.0 parts by mass or less, more preferably 5.0 parts by mass or less, from the viewpoint of abrasion resistance.

A content of stearic acid when compounded based on 100 parts by mass of the rubber component is preferably 0.5 parts by mass or more, more preferably 1 part by mass or more, from the viewpoint of processability. Moreover, it is preferably 10 parts by mass or less, more preferably 5 parts by mass or less, from the viewpoint of vulcanization rate.

### <<Vulcanizing agent>>

The rubber composition can comprise a vulcanizing agent. As the vulcanizing agent, an organic peroxide or a sulfur-based vulcanizing agent can be used. As the organic peroxide, for example, benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexin-3, 1,3-bis(t-butylperoxypropyl)benzene, or the like can be used. Moreover, as the sulfur-based vulcanizing agent, for example, sulfur, morpholine disulfide, or the like can be used. The vulcanizing agent may be used alone, or two or more thereof may be used in combination. Among them, sulfur is preferable.

A content of the vulcanizing agent when compounded based on 100 parts by mass of the rubber component is 0.5 parts by mass or more, preferably 1 part by mass or more, from the viewpoint of abrasion resistance. Moreover, the content is 5 parts by mass or less, preferably 3 parts by mass or less.

### <<Vulcanization accelerator>>

Examples of the vulcanization accelerator include, but not particularly limited to, for example, sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators, and among them, sulfenamide-based vulcanization accelerators and guanidine-based vulcanization accelerators are preferable from the viewpoint that the effects of the present invention can be obtained more appropriately.

Examples of the sulfenamide-based vulcanization accelerator include CBS (N-cyclohexyl-2-benzothiazolyl sulfenamide), TBBS (N-t-butyl-2-benzothiazolyl sulfenamide), N-oxyethylene-2-benzothiazolyl sulfenamide, N,N'-diisopropyl-2-benzothiazolyl sulfenamide, N,N-dicyclohexyl-2-benzothiazolyl sulfenamide, and the like. Examples of the thiazole-based vulcanization accelerator include 2-mercaptobenzothiazole, dibenzothiazolyl disulfide, and the like. Examples of the thiuram-based vulcanization accelerator include tetramethylthiuram monosulfide, tetramethylthiuram disulfide, tetrabenzylthiuram disulfide (TBzTD), and the like. Examples of the guanidine-based vulcanization accelerator include diphenylguanidine (DPG), diorthotrilguanidine, orthotrilbiguanidine, and the like. They may be used alone, or two or more thereof may be used in combination. Among them, CBS, DPG, and a combination thereof are preferable from the viewpoint that the effects of the present invention can be obtained more appropriately.

A content of the vulcanization accelerator when compounded based on 100 parts by mass of the rubber component is preferably 0.5 parts by mass or more, more preferably 1.0 part by mass or more, further preferably 1.5 parts by mass or more, from the viewpoint of abrasion resistance. The content is preferably 8 parts by mass or less, more preferably 7 parts by mass or less, further preferably 6 parts by mass or less.

### <Producing method of rubber composition for first rubber layer and rubber composition for second rubber layer>

Both the rubber composition for first rubber layer and the rubber composition for second rubber layer can be produced by a general method. For example, it can be produced by a method of kneading components other than vulcanizing agents and vulcanization accelerators, of the above-described components, with a known kneading machine used in the general tire industry such as a Banbury mixer, a kneader, and an open roll (a base kneading step), then adding the vulcanizing agents and the vulcanization accelerators to the mixture to further knead them (a finish kneading step) to obtain an unvulcanized rubber composition, and vulcanizing the unvulcanized rubber composition, and the like.

A kneading condition is not particularly limited, but in the case of the rubber composition for first rubber layer, for the base kneading step, kneading at a discharge temperature from 140 to 160°C for 1 to 5 minutes is preferable, and for the finish kneading step, kneading until the temperature reaches 75 to 100°C for 1 to 5 minutes is preferable. In the case of the rubber composition for second rubber layer, for the base kneading step, kneading at a discharge temperature from 140 to 160°C for 1 to 5 minutes is preferable, and for the finish kneading step, kneading until the temperature reaches 75 to 100°C for 1 to 5 minutes is preferable. As a vulcanization condition, it is preferable that both the rubber composition for first rubber layer and the rubber composition for second rubber layer are vulcanized, for example, at 140 to 180°C for 3 to 20 minutes.

### <Producing method of tire>

The tire of the present invention can be produced by extruding each of the unvulcanized rubber composition for first rubber layer and the unvulcanized rubber composition for second rubber layer as mentioned above into a shape of a predetermined tread part and attaching it together with other tire members on a tire molding machine to form an unvulcanized tire, followed by heating and pressurizing this unvulcanized tire in a vulcanizer. The formation of the tread can also be prepared by a method of extruding each of the unvulcanized rubber composition for first rubber layer and the unvulcanized rubber composition for second rubber layer into a predetermined shape and attaching them together. A heating and pressurizing condition is, for example, 140 to 180°C for 3 to 20 minutes.

### <Tire>

The tire of the present invention can be appropriately used as a tire for a passenger car, a tire for a truck/bus, a tire for a two-wheeled vehicle, or a racing tire. Among them, it is preferably used as a tire for a passenger car. Besides, the tire for a passenger car is a tire on the premise that it is mounted on a car running on four wheels and refers to one having a standardized load of 1000 kg or less. The tire of the present invention is preferably a pneumatic tire.

### EXAMPLE

Hereinafter, the present invention will be described based on Examples, though the present invention is not limited to these Examples.

Hereinafter, various chemicals used during synthesis and polymerization will be collectively described. Besides, the chemicals were purified by a conventional method as needed.
· n-hexane: manufactured by KANTO CHEMICAL CO., INC.
· styrene: manufactured by KANTO CHEMICAL CO., INC.
butadiene: 1,3-butadiene manufactured by Tokyo Chemical Industry Co., Ltd.
· TMEDA: N,N,N',N'-tetramethylethylenediamine manufactured by KANTO CHEMICAL CO., INC.
· n-butyllithium solution: 1.6M n-butyllithium hexane solution manufactured by KANTO CHEMICAL CO., INC.
· 2,6-di-tert-butyl-p-cresol: Nocrac 200 manufactured by Ouchi Shinko Chemical Industry Co., Ltd.
· alcohol: ethanol manufactured by KANTO CHEMICAL CO., INC.
· amine-based modifying agent: N,N-bis(trimethylsilyl) aminopropylmethyldiethoxysilane

### Synthesis example 1 (Synthesis of hydrogenated SBR, hydrogenation rate: 95 mol%)

To a heat-resistant reaction vessel sufficiently subjected to nitrogen purge, 2000 mL of n-hexane, 60 g of styrene, 140 g of 1,3-butadiene, 0.9 g of TMEDA, and 0.45 mmol of n-butyllithium were added, and the mixture was stirred at 50°C for 5 hours to perform a polymerization reaction. Next, the mixture was stirred for 20 minutes while supplying a hydrogen gas at a pressure of 0.4 MPa-Gauge and reacted with an unreacted polymer terminal lithium into lithium hydride. Hydrogenation was performed using a catalyst mainly composed of titanocenedichloride with a hydrogen gas supplying pressure at 0.7 MPa-Gauge and a reaction temperature at 90°C. When hydrogen absorption reached an integrated amount of an intended hydrogenation rate, the reaction temperature was set to a normal temperature and the hydrogen pressure is returned to a normal pressure to extract the hydrogen gas-from the reaction vessel, and the reaction solution was charged and stirred in water to remove the solvent by steam stripping, thereby obtaining a hydrogenated SBR.

### <Evaluation of obtained copolymer>

### (Measurement of hydrogenation rate)

A solution of the obtained polymer with a concentration of 15% by mass was prepared using carbon tetrachloride as a solvent to calculate a hydrogenation rate from a spectral reduction rate of an unsaturated bond part of ¹H-NMR at 100 MHz.

### (Measurement of styrene content)

¹H-NMR measurement was performed at 25°C using a JEOL JNM-A 400 NMR device, from which spectrum a phenyl proton based on 6.5 to 7.2 ppm styrene unit and a vinyl proton based on 4.9-5.4 ppm butadiene unit were calculated, to determine a styrene content from a ratio of the phenyl proton to the vinyl proton.

### (Measurement of weight-average molecular weight (Mw))

A Mw was calculated in terms of a standard polystyrene based on measurement values obtained by a gel permeation chromatography (GPC) (GPC-8000 Series manufactured by Tosoh Corporation, detector: differential refractometer, column: TSKGEL SUPERMULTIPORE HZ-M manufactured by Tosoh Corporation).

The hydrogenated SBR obtained had a hydrogenation rate of 95 mol%, a styrene content of 30% by mass, and a weight-average molecular weight (Mw) of 450,000.

Various chemicals used in Examples and Comparative examples are collectively shown below.
· NR: RSS#3
SBR1: HPR355 manufactured by JSR Corporation (S-SBR modified with alkoxysilane, styrene content: 28% by mass, vinyl bond amount: 56 mol%, Mw: 400,000)
SBR2: One synthesized according to the above-described Synthesis example 1 (hydrogenated S-SBR, hydrogenation rate: 95%, styrene content: 30% by mass, Mw: 450,000)
· SBR3: JSR1502 manufactured by JSR Corporation (E-SBR, styrene content: 24% by mass, vinyl bond amount: 16%, Mw: about 600,000)
· BR: UBEPOL-BR360B manufactured by Ube Industries, Ltd. (high cis BR, cis 1,4-bond content: 98%, Mw: 570,000)
· Carbon black 1: Show Black N220 manufactured by Cabot Japan K.K. (N₂SA: 114 m²/g, DBP oil absorption amount: 114 mL/100 g)
· Carbon black 2: Show Black N351H manufactured by Cabot Japan K.K. (N₂SA: 69 m²/g, DBP oil absorption amount: 128 mL/100 g)
· Silica: ULTRASIL (Registered Trademark) VN3 manufactured by Evonik Degussa GmbH (BET specific surface area: 175 m²/g)
· Silane coupling agent: Si266 manufactured by Evonik Degussa GmbH (bis(3-triethoxysilylpropyl)disulfide)
· Oil: Diana Process NH-70S manufactured by Idemitsu Kosan Co., Ltd. (aroma-based process oil)
· Wax: SUNNOC N manufactured by Ouchi Shinko Chemical Industry Co., Ltd.
· Stearic acid: Bead stearic acid "CAMELLIA" manufactured by NOF CORPORATION
· Zinc oxide: Zinc oxide No. 1 manufactured by Mitsui Mining & Smelting Co., Ltd.
· Antioxidant 1: Antigen 6C manufactured by Sumitomo Chemical Co., Ltd. (N-phenyl-N'-(1,3-dimethylbutyl)-p-phenylenediamine)
· Antioxidant 2 (reactive antioxidant): Nocrac G-1 manufactured by Ouchi Shinko Chemical Industry Co., Ltd. (N-phenyl-N'-(3-methacryloyloxy-2-hydroxypropyl)-p-phenylenediamine)
· Sulfur: Powdered sulfur manufactured by Karuizawa Sulfur Co, Ltd.
· Vulcanization accelerator 1: Nocceler CZ manufactured by Ouchi Shinko Chemical Industry Co., Ltd. (N-cyclohexyl-2-benzothiazolylsulfenamide)
· Vulcanization accelerator 2: Nocceler D manufactured by Ouchi Shinko Chemical Industry Co., Ltd. (1,3-diphenylguanidine)

### (Production of unvulcanized rubber composition for first rubber layer)

According to the compounding formulations shown in Table 1, using a 16L Banbury mixer manufactured by Kobe Steel, Ltd., chemicals other than sulfur and vulcanization accelerators were charged and kneaded for 5 minutes so that the temperature reached a discharge temperature of 160°C. Next, sulfur and vulcanization accelerators were added to the obtained kneaded product in the compounding amounts shown in Table 1, and then the mixture was kneaded for 5 minutes until the temperature reached 80°C using the 16 L Banbury mixer manufactured by Kobe Steel, Ltd., to obtain unvulcanized rubber compositions for first rubber layer A to E corresponding to the compoundings A to E of the first rubber layer, respectively.

**Table 1**

| Compounding amount (part by mass) | First rubber layer | | | | |
|---|---|---|---|---|---|
| | A | B | C | D | E |
| NR | 20 | 20 | 20 | 30 | 20 |
| SBR1 | 30 | 30 | - | 30 | 30 |
| SBR2 | - | - | 30 | - | - |
| SBR3 | 50 | 50 | 50 | 40 | 50 |
| Carbon black 1 | 5 | 5 | 5 | 5 | 5 |
| Silica | 60 | 60 | 60 | 60 | 60 |
| Silane coupling agent | 4.8 | 4.8 | 4.8 | 4.8 | 4.8 |
| Oil | 10 | 10 | 10 | 10 | 10 |
| Wax | 1.5 | 1.5 | 1.5 | 1.5 | 1.5 |
| Stearic acid | 2.5 | 2.5 | 2.5 | 2.5 | 2.5 |
| Zinc oxide | 2 | 2 | 2 | 2 | 2 |
| Antioxidant 1 | 2 | 1 | 1 | 2 | 3 |
| Antioxidant 2 | - | 1 | - | - | - |
| Sulfur | 1.5 | 1.5 | 1.5 | 1.5 | 1.5 |
| Vulcanization accelerator 1 | 2 | 2 | 2 | 2 | 2 |
| Vulcanization accelerator 2 | 2 | 2 | 2 | 2 | 2 |

### (Production of rubber composition for second rubber layer)

According to the compounding formulations shown in Table 2, using the 16L Banbury mixer manufactured by Kobe Steel, Ltd., chemicals other than sulfur and vulcanization accelerators were charged and kneaded for 3 minutes so that the temperature reached a discharge temperature of 160°C. Next, sulfur and vulcanization accelerators were added to the obtained kneaded product in the compounding amounts shown in Table 2, and then the mixture was kneaded for 5 minutes until the temperature reached 80°C using the 16 L Banbury mixer manufactured by Kobe Steel, Ltd., to obtain unvulcanized rubber compositions for second rubber layer a to e corresponding to the compoundings a to e of the second rubber layer.

**Table 2**

| Compounding amount (part by mass) | S econd rubber lay er | | | | |
|---|---|---|---|---|---|
| | a | b | c | d | e |
| NR | 65 | 65 | 75 | 65 | 75 |
| BR | 35 | 35 | 25 | 35 | 25 |
| Carbon black 2 | 35 | 35 | 35 | 35 | 35 |
| Oil | 7 | 7 | 7 | 7 | 7 |
| Wax | 1.25 | 1.25 | 1.25 | 1.25 | 1.25 |
| Stearic acid | 2 | 2 | 2 | 2 | 2 |
| Zinc oxide | 3 | 3 | 3 | 3 | 3 |
| Antioxidant 1 | 4 | 2.5 | 4 | 1 | 1 |
| Sulfur | 2 | 2 | 2 | 2 | 2 |
| Vulcanization accelerator 1 | 2 | 2 | 2 | 2 | 2 |

### (Production of tires of Examples 1 to 6 and Comparative examples 1 to 5)

The unvulcanized rubber compositions for first rubber layer A to E and the unvulcanized rubber compositions for second rubber layer a to e were used to combine the first rubber layer and the second rubber layer according to Table 3, and with adjustment of a ratio (F) of a thickness of the second rubber layer to a thickness of the entire tread (the first rubber layer and the second rubber layer), the mixture was extruded into a tread shape, attached together with other members, and vulcanized at 170°C for 12 minutes to obtain pneumatic tires of Examples 1 to 6 and Comparative examples 1 to 5 (size 195/65R15). Besides, as a tread pattern, as shown in FIG. 1, one having an outer circumferential main groove and an inner circumferential main groove in each of the two half tread regions divided by the tire center line was used.

### (Production of tires of Examples 7 to 12 and Comparative examples 6 to 10)

The unvulcanized rubber compositions for first rubber layer A to E and the unvulcanized rubber compositions for second rubber layer a to e were used to combine the first rubber layer and the second rubber layer according to Table 4, and with adjustment of a ratio (F) of a thickness of the second rubber layer to a thickness of the entire tread (the first rubber layer and the second rubber layer), the mixture was extruded into a tread shape, attached together with other members, and vulcanized at 170°C for 12 minutes to obtain pneumatic tires of Examples 7 to 12 and Comparative examples 6 to 10 (size 195/65R15). Besides, as a tread pattern, as shown in FIG. 2, one in which a plurality of sipes are formed, so as to have an angle I° formed between a longitudinal direction of the sipe and a tire width direction, in a land part included in a center area having a width corresponding to 50% of a tread grounding width with the tire center line centered.

For the pneumatic tire obtained in each Example and Comparative example, measurements were performed by methods shown below to calculate desired values from the obtained measured values. The results are shown in Tables 3 and 4.

### <Measurement>

### (Acetone extraction amount (AE amount))

An acetone extraction amount was calculated by the following equation by immersing each vulcanized rubber specimen in acetone for 72 hours to extract a soluble component and measuring a mass of each test piece before and after extraction in accordance with JIS K 6229. Acetone extraction amount (%) = {(mass of rubber specimen before extraction - mass of rubber specimen after extraction) / (mass of rubber specimen before extraction)} × 100

### (Amine amount)

For the extract obtained by the above-described acetone extraction, an amine amount was measured according to the above-described method of measuring the amine amount (%) in the acetone extraction content. An amine amount related to the first rubber layer is defined as A (% by mass), and an amine amount related to the second rubber layer is defined as B (% by mass).

### (Rate of change (E) of complex elastic moduli E* before and after ozone deterioration test)

### <<Complex elastic modulus E* before ozone deterioration test>>

A viscoelasticity measurement sample having a length of 20 mm, a width of 4 mm, and a thickness of 1 mm was collected from inside a first rubber layer of a tread part of each test tire so that a tire circumferential direction is on a long side, and using Eplexor series manufactured by gabo Systemtechnik GmbH, a complex elastic modulus E* was measured under a condition of a temperature at 30°C, an initial strain of 5%, a dynamic strain of 1%, a frequency of 10 Hz, and an extension mode. Besides, a thickness direction of a sample was defined as a tire radial direction.

### <<Complex elastic modulus E* after ozone deterioration test>>

Each viscoelasticity measurement sample collected in the similar manner as described above was subjected to a reciprocating motion for 48 hours under a condition of a frequency of the reciprocating motion of 0.5 ± 0.025 Hz, an ozone concentration of 50 ± 5 pphm, a test temperature of 40°C, and a tensile strain of 20 ± 2%, to perform a dynamic ozone deterioration test, in accordance with JIS K 6259.

For each sample after the ozone deterioration test, a complex elastic modulus E* was measured using Eplexor series manufactured by gabo Systemtechnik GmbH under a condition of a temperature at 30°C, an initial strain of 5%, a dynamic strain of 1%, a frequency of 10 Hz, and an extension mode.

### <<Rate of change (E) before and after ozone deterioration test>>

From the complex elastic modulus E* before the ozone deterioration test and the complex elastic modulus E* after the ozone deterioration test as measured above, a rate of change E (%) of the complex elastic moduli E* before and after the ozone deterioration test was calculated according to the following equation: E (%) = {(E* after ozone test deterioration - E* before ozone test deterioration) / E* before ozone test deterioration} × 100

### <Evaluation>

### <Steering stability during high-speed running>

Each test tire was mounted on all wheels of a domestic FF vehicle with a displacement of 660 cc, and actual vehicle running was performed on a test course with a dry asphalt surface at a temperature of 20°C to 30°C. Steering stability was evaluated based on each feeling of straight running, changing lanes, and accelerating/decelerating when running by a test driver at 120 km/h. A total score was calculated with evaluation up to 10 points by 20 test drivers based on evaluation criteria that the higher the score is, the more excellent the steering stability is. A total score for each test tire was indicated as an index with a total score of reference Comparative examples being as a reference value (100). A target value of the index is 127 or more.

**Table 3**

| | | Exa mple | | | | | | Compar ative example | | | | |
|---|---|---|---|---|---|---|---|---|---|---|---|---|
| | | 1 | 2 | 3 | 4 | 5 | 6 | 1 | 2 | 3 | 4 | 5 |
| Tread composition | | | | | | | | | | | | |
| | Compounding of first rubber layer | A | B | C | A | D | D | A | E | A | D | D |
| | Compounding of second rubber layer | a | b | b | c | c | c | d | d | e | e | e |
| First AE amount | | 12.2 | 12.0 | 11.8 | 12.2 | 11.9 | 11.9 | 12.2 | 12.4 | 11.9 | 11.9 | 11.9 |
| B/A (>1) | | 2.65 | 1.77 | 3.47 | 2.63 | 2.57 | 2.57 | 0.83 | 0.56 | 0.81 | 0.80 | 0.80 |
| First amine amount (A) | | 8.47 | 8.65 | 4.42 | 8.47 | 8.67 | 8.67 | 8.48 | 12.45 | 8.69 | 8.69 | 8.69 |
| Second amine amount (B) | | 22.44 | 15.31 | 15.31 | 22.26 | 22.26 | 22.26 | 7.02 | 7.02 | 7.02 | 6.94 | 6.94 |
| E* rate of change (E) | | 22 | 22 | 22 | 25 | 25 | 25 | 32 | 25 | 35 | 38 | 38 |
| Second IR-based rubber amount (% by mass) | | 41.6 | 42.0 | 42.0 | 48.0 | 48.0 | 48.0 | 42.4 | 42.4 | 48.9 | 48.9 | 48.9 |
| First IR-based rubber amount (% by mass) | | 10.3 | 10.3 | 10.4 | 10.3 | 15.5 | 15.5 | 10.3 | 10.3 | 10.3 | 15.5 | 15.5 |
| D/C | | 2.47 | 1.56 | 3.11 | 2.47 | 2.47 | 2.47 | 0.63 | 0.42 | 0.63 | 0.63 | 0.63 |
| | First antioxidant amount (% by mass) (C) | 1.03 | 1.03 | 0.52 | 1.03 | 1.03 | 1.03 | 1.03 | 1.54 | 1.03 | 1.03 | 1.03 |
| | Second antioxidant amount (% by mass) (D) | 2.56 | 1.62 | 1.62 | 2.56 | 2.56 | 2.56 | 0.65 | 0.65 | 0.65 | 0.65 | 0.65 |
| B-A | | 13.97 | 6.66 | 10.89 | 13.79 | 13.60 | 13.60 | -1.46 | -5.44 | -1.68 | -1.75 | -1.75 |
| D-C | | 1.53 | 0.58 | 1.10 | 1.53 | 1.53 | 1.53 | -0.38 | -0.89 | -0.38 | -0.38 | -0.38 |
| Second thickness at tread (%) (F) | | 5 | 5 | 5 | 5 | 5 | 25 | 5 | 5 | 5 | 5 | 25 |
| (B-A) × F | | 70 | 33 | 54 | 69 | 68 | 340 | -7 | -27 | -8 | -9 | -44 |
| H/G | | 0.67 | 0.33 | 1.00 | 0.67 | 0.33 | 1.00 | 0.67 | 0.33 | 0.67 | 0.33 | 1.00 |
| | Outer main groove width (mm) (G) | 12 | 15 | 12 | 12 | 15 | 12 | 12 | 15 | 12 | 15 | 12 |
| | Inner main groove width (mm) (H) | 8 | 5 | 12 | 8 | 5 | 12 | 8 | 5 | 8 | 5 | 12 |
| (H/G) × E | | 15 | 7 | 22 | 17 | 8 | 25 | 15 | 7 | 17 | 8 | 25 |
| Steering stability at high speed | | 136 | 136 | 136 | 155 | 164 | 173 | 100 | 109 | 109 | 91 | 73 |

**Table 4**

| | | Exa mple | | | | | | Compara tive example | | | | |
|---|---|---|---|---|---|---|---|---|---|---|---|---|
| | | 7 | 8 | 9 | 10 | 11 | 12 | 6 | 7 | 8 | 9 | 10 |
| Tread composition | | | | | | | | | | | | |
| | Compounding of first rubber layer | A | B | C | A | D | D | A | E | A | D | D |
| | Compounding of second rubber layer | a | b | b | c | c | c | d | d | e | e | e |
| First AE amount | | 12.2 | 12.0 | 11.8 | 12.2 | 11.9 | 11.9 | 12.2 | 12.4 | 11.9 | 11.9 | 11.9 |
| B/A (>1) | | 2.65 | 1.77 | 3.47 | 2.63 | 2.57 | 2.57 | 0.83 | 0.56 | 0.81 | 0.80 | 0.80 |
| First amine amount (A) | | 8.47 | 8.65 | 4.42 | 8.47 | 8.67 | 8.67 | 8.48 | 12.45 | 8.69 | 8.69 | 8.69 |
| Second amine amount (B) | | 22.44 | 15.31 | 15.31 | 22.26 | 22.26 | 22.26 | 7.02 | 7.02 | 7.02 | 6.94 | 6.94 |
| E* rate of change (E) | | 22 | 22 | 22 | 25 | 25 | 25 | 32 | 25 | 35 | 38 | 38 |
| Second IR-based rubber amount (% by mass) | | 41.6 | 42.0 | 42.0 | 48.0 | 48.0 | 48.0 | 42.4 | 42.4 | 48.9 | 48.9 | 48.9 |
| First IR-based rubber amount (% by mass) | | 10.3 | 10.3 | 10.4 | 10.3 | 15.5 | 15.5 | 10.3 | 10.3 | 10.3 | 15.5 | 15.5 |
| D/C | | 2.47 | 1.56 | 3.11 | 2.47 | 2.47 | 2.47 | 0.63 | 0.42 | 0.63 | 0.63 | 0.63 |
| | First antioxidant amount (% by mass) (C) | 1.03 | 1.03 | 0.52 | 1.03 | 1.03 | 1.03 | 1.03 | 1.54 | 1.03 | 1.03 | 1.03 |
| | Second antioxidant amount (% by mass) (D) | 2.56 | 1.62 | 1.62 | 2.56 | 2.56 | 2.56 | 0.65 | 0.65 | 0.65 | 0.65 | 0.65 |
| B-A | | 13.97 | 6.66 | 10.89 | 13.79 | 13.60 | 13.60 | -1.46 | -5.44 | -1.68 | -1.75 | -1.75 |
| D-C | | 1.53 | 0.58 | 1.10 | 1.53 | 1.53 | 1.53 | -0.38 | -0.89 | -0.38 | -0.38 | -0.38 |
| Second thickness at tread (%) (F) | | 5 | 5 | 5 | 5 | 5 | 25 | 5 | 5 | 5 | 5 | 25 |
| (B-A) × F | | 70 | 33 | 54 | 69 | 68 | 340 | -7 | -27 | -8 | -9 | -44 |
| Inclination of sipe (°) (I) | | 40 | 30 | 20 | 40 | 30 | 20 | 40 | 30 | 40 | 30 | 20 |
| (B-A) / I | | 0.35 | 0.22 | 0.54 | 0.34 | 0.45 | 0.68 | 0.35 | 0.22 | 0.34 | 0.45 | 0.68 |
| Steering stability at high speed | | 136 | 136 | 136 | 155 | 164 | 173 | 100 | 109 | 109 | 91 | 73 |

From the results in Tables 3 and 4, it can be found that the tires of the present invention according to Examples show an excellent steering stability at a high speed as compared with the tires of Comparative examples.

### REFERENCE SIGNS LIST

- CL: Tire center line
- Ti: Inner grounding end
- To: Outer grounding end
- 11: Outer circumferential groove
- 12: Inner circumferential groove
- 13: Outer circumferential groove
- 14: Inner circumferential groove
- W: Tread grounding width
- CA: Center area
- 21: Sipe
- 22: Sipe
- I: Angle formed between longitudinal direction of sipe and tire width direction

## Claims

1. A tire comprising a tread part, the tread part comprising at least a first rubber layer of a tread surface and a second rubber layer adjacent to inside the first rubber layer in a tire radial direction,
wherein the first rubber layer is composed of a rubber composition comprising a rubber component comprising an isoprene-based rubber and has an acetone extraction content of 25% by mass or less, preferably 20% by mass or less, more preferably 15% by mass or less,
wherein the second rubber layer is composed of a rubber composition comprising a rubber component comprising an isoprene-based rubber and has an amine amount B of 10.00% by mass or more, preferably 12.00% by mass or more, more preferably 15.00% by mass or more, in the acetone extraction content,
wherein, when an amine amount (% by mass) in the acetone extraction content of the first rubber layer is defined as A, the A and the B satisfy B>A, preferably B/A≥1.1, more preferably B/A≥1.5, further preferably B/A≥2.0, and
wherein a rate of change E of complex elastic moduli E* of the rubber composition of the first rubber layer before and after an ozone deterioration test for the tire is 30% or less, preferably 28% or less, more preferably 26% or less,
wherein the acetone extraction content, the amine amount in the acetone extraction content and the rate of change E of complex elastic moduli E* of the rubber composition of the first rubber layer before and after an ozone deterioration are determined by the methods defined in the description.

2. The tire of claim 1, wherein the rubber component of the second rubber layer comprises 45% by mass or more, preferably 50% by mass or more, more preferably 55% by mass or more of an isoprene-based rubber.

3. The tire of claim 1 or 2, wherein the rubber component of the first rubber layer comprises 12.5% by mass or more, preferably 15.0% by mass or more, more preferably 20.0% by mass or more of an isoprene-based rubber.

4. The tire of any one of claims 1 to 3, wherein, when the rubber composition of the first rubber layer comprises an antioxidant, a content (% by mass) of the antioxidant in the rubber composition being defined as C, and the rubber composition of the second rubber layer comprises an antioxidant, a content (% by mass) of the antioxidant in the rubber composition being defined as D, D≥C is satisfied.

5. The tire of any one of claims 1 to 4, wherein the E is 25% or less, preferably 22% or less.

6. The tire of any one of claims 1 to 5, wherein the A and the B satisfy B-A≥5.00, preferably B-A≥7.00, more preferably B-A≥10.00, further preferably B-A≥11.00, further preferably B-A≥13.00.

7. The tire of any one of claims 1 to 6, wherein the C and the D satisfy D-C≥0.50, preferably D-C≥0.80, more preferably D-C≥1.10, further preferably D-C≥1.30, further preferably D-C≥1.50.

8. The tire of any one of claims 1 to 7, wherein a ratio F of a thickness of the second rubber layer to a thickness of the entire tread is 10 to 50%, preferably 15 to 40%, more preferably 20 to 30% at a position of a tire center line of the tread part.

9. The tire of claim 8, wherein the A, the B, and the F satisfy (B-A) × F≥30, preferably (B-A) × F≥40, more preferably (B-A) × F≥50, further preferably (B-A) × F≥60.

10. The tire of any one of claims 1 to 9, wherein the rubber component of the first rubber layer comprises a styrene-butadiene rubber.

11. The tire of any one of claims 1 to 10, wherein the rubber component of the second rubber layer comprises a butadiene rubber.

12. The tire of any one of claims 1 to 11, wherein the tread pattern of the tread surface comprises a circumferential main groove, the circumferential main groove at least comprising an outer circumferential main groove that is placed, in at least one of two half tread regions divided by the tire center line, on an outer side of the tire when mounted on a vehicle, and an inner circumferential main groove provided inside the outer circumferential main groove, and when a groove width (mm) of the outer circumferential main groove is defined as G and a groove width (mm) of the inner circumferential main groove is defined as H, the G and the H satisfy H<G.

13. The tire of claim 12, wherein the G, the H, and the E satisfy (H/G) × E≤25, preferably (H/G) × E≤24, more preferably (H/G) × E≤23, further preferably (H/G) × E≤22.

14. The tire of any one of claims 1 to 13, wherein, when a region having a width corresponding to 50% of a tread grounding width with the tire center line centered is defined as a center area, in the tread pattern of the tread surface, a plurality of sipes are formed in a land part included in the center area, and an angle I formed between a longitudinal direction of the sipe and a tire width direction is 8° or more and less than 45°, preferably 10° or more and 43° or less, more preferably 15° or more and 41° or less, further preferably 20° or more and 40° or less.

15. The tire of claim 14, wherein the A, the B and the I satisfy (B-A)/I≥0.20, preferably (B-A)/I≥0.21, more preferably (B-A)/I≥0.22, further preferably (B-A)/I≥0.30.

## Patentansprüche

1. Reifen, umfassend einen Laufstreifenteil, wobei der Laufstreifenteil zumindest eine erste Kautschukschicht einer Laufstreifenoberfläche und eine zweite Kautschukschicht, die zu der ersten Kautschukschicht in einer Reifenradialrichtung innen benachbart ist, umfasst,
wobei die erste Kautschukschicht mit einer Kautschukzusammensetzung aufgebaut ist, die eine Kautschukkomponente umfasst, welche eine einen Isopren-basierten Kautschuk umfasst und einen Aceton-Extraktions-Gehalt von 25 Massen-% oder weniger, bevorzugt 20 Massen-% oder weniger, bevorzugter 15 Massen-% oder weniger, aufweist,
wobei die zweite Kautschukschicht mit einer Kautschukzusammensetzung aufgebaut ist, die eine Kautschukkomponente umfasst, welche einen Isopren-basierten Kautschuk umfasst und, in dem Aceton-Extraktions-Gehalt, einen Amin-Gehalt B von 10,00 Massen-% oder mehr, bevorzugt 12,00 Massen-% oder mehr, bevorzugter 15,00 Massen-% oder mehr, aufweist,
wobei, wenn eine Amin-Menge (Massen-%) in dem Aceton-Extraktions-Gehalt der ersten Kautschukschicht als A definiert ist, das A und das B B>A, bevorzugt B/A≥1,1, bevorzugter B/A≥1,5, weiter bevorzugt B/A≥2,0, erfüllen, und
wobei eine Änderungsrate E komplexer Elastizitätsmoduln E* der Kautschukzusammensetzung der ersten Kautschukschicht vor und nach einem Ozonschädigungstest für den Reifen 30% oder weniger, bevorzugt 28% oder weniger, bevorzugter 26% oder weniger, beträgt,
wobei der Aceton-Extraktions-Gehalt, die Amin-Menge in dem Aceton-Extraktions-Gehalt und die Änderungsrate E komplexer Elastizitätsmoduln E* der Kautschukzusammensetzung der ersten Kautschukschicht vor und nach einer Ozonschädigung durch die in der Beschreibung definierten Verfahren bestimmt sind.

2. Reifen nach Anspruch 1, wobei die Kautschukkomponente der zweiten Kautschukschicht 45 Massen-% oder mehr, bevorzugt 50 Massen-% oder mehr, bevorzugter 55 Massen-% oder mehr eines Isopren-basierten Kautschuks umfasst.

3. Reifen nach Anspruch 1 oder 2, wobei die Kautschukkomponente der ersten Kautschukschicht 12,5 Massen-% oder mehr, bevorzugt 15,0 Massen-% oder mehr, bevorzugter 20,0 Massen-% oder mehr eines Isopren-basierten Kautschuks umfasst.

4. Reifen nach einem der Ansprüche 1 bis 3, wobei, wenn die Kautschukzusammensetzung der ersten Kautschukschicht ein Antioxidans umfasst, ein Gehalt (Massen-%) des Antioxidans in der Kautschukzusammensetzung als C definiert ist, und die Kautschukzusammensetzung der zweiten Kautschukschicht ein Antioxidans umfasst, wobei ein Gehalt (Massen-%) des Antioxidans in der Kautschukzusammensetzung als D definiert ist, D≥C erfüllt ist.

5. Reifen nach einem der Ansprüche 1 bis 4, wobei das E 25% oder weniger, bevorzugt 22% oder weniger, beträgt.

6. Reifen nach einem der Ansprüche 1 bis 5, wobei das A und das B B-A≥5,00, bevorzugt B-A≥7,00, bevorzugter B-A≥10,00, weiter bevorzugt B-A≥11,00, weiter bevorzugt B-A≥13,00, erfüllen.

7. Reifen nach einem der Ansprüche 1 bis 6, wobei das C und das D D-C≥0,50, bevorzugt D-C≥0,80, bevorzugter D-C≥1,10, weiter bevorzugt D-C≥1,30, weiter bevorzugt D-C≥1,50 erfüllen.

8. Reifen nach einem der Ansprüche 1 bis 7, wobei ein Verhältnis F einer Dicke der zweiten Kautschukschicht zu einer Dicke des gesamten Laufstreifens an einer Position einer Reifenmittellinie des Laufstreifenteils 10 bis 50%, bevorzugt 15 bis 40%, bevorzugter 20 bis 30%, beträgt.

9. Reifen nach Anspruch 8, wobei das A, das B und das F (B-A) × F≥30, bevorzugt (B-A) × F≥40, bevorzugter (B-A) × F≥50, weiter bevorzugt (B-A) × F≥60, erfüllen.

10. Reifen nach einem der Ansprüche 1 bis 9, wobei die Kautschukkomponente der ersten Kautschukschicht einen Styrol-Butadien-Kautschuk umfasst.

11. Reifen nach einem der Ansprüche 1 bis 10, wobei die Kautschuckomponente der zweiten Kautschukschicht einen Butadien-Kautschuk umfasst.

12. Reifen nach einem der Ansprüche 1 bis 11, wobei das Laufstreifenprofil der Laufstreifenoberfläche eine Umfangshauptrille umfasst, wobei die Umfangshauptrille zumindest eine äußere Umfangshauptrille, die, in zumindest einem von zwei durch die Reifenmittellinie getrennten Halb-Laufstreifen-Bereichen, auf einer äußeren Seite des Reifens platziert ist, wenn an einem Fahrzeug montiert, und eine innere Umfangshauptrille, die innerhalb der äußeren Umfangshauptrille vorgesehen ist, umfasst, und, wenn eine Rillenbreite (mm) der äußeren Umfangshauptrille als G definiert ist und eine Rillenbreite (mm) der inneren Umfangshauptrille als H definiert ist, das G und das H H<G erfüllen.

13. Reifen nach Anspruch 12, wobei das G, das H und das E (H/G) × E≤25, bevorzugt (H/G) × E≤24, bevorzugter (H/G) × E≤23, weiter bevorzugt (H/G) × E≤22, erfüllen.

14. Reifen nach einem der Ansprüche 1 bis 13, wobei, wenn ein Bereich, der eine Breite aufweist, die 50% einer Laufstreifen-Bodenkontaktbreite entspricht, mit der Reifenmittellinie in der Mitte, als eine Mittelfläche definiert ist, in dem Laufstreifenprofil der Laufstreifenoberfläche, eine Mehrzahl an Einschnitten in einem Positivprofilteil gebildet sind, der in der Mittelfläche enthalten ist, und ein zwischen einer Längsrichtung des Einschnitts und einer Reifenbreitenrichtung gebildeter Winkel I 8° oder mehr und weniger als 45°, bevorzugt 10° oder mehr und 43° oder weniger, bevorzugter 15° oder mehr und 41° oder weniger, weiter bevorzugt 20° oder mehr und 40° oder weniger, beträgt.

15. Reifen nach Anspruch 14, wobei das A, das B und das I (B-A)/I≥0,20, bevorzugt (B-A)/I≥0,21, bevorzugter (B-A)/I≥0,22, weiter bevorzugt (B-A)/I≥0,30, erfüllen.

## Revendications

1. Pneumatique comprenant une partie de bande de roulement, la partie de bande de roulement comprenant au moins une première couche de caoutchouc d'une surface de bande de roulement et une seconde couche de caoutchouc adjacente à l'intérieur de la première couche de caoutchouc dans une direction radiale de pneumatique,
dans lequel la première couche de caoutchouc est composée d'une composition de caoutchouc comprenant un composant de caoutchouc comprenant un caoutchouc à base d'isoprène et a une teneur d'extraction d'acétone de 25 % en masse ou moins, de préférence de 20 % en masse ou moins, davantage de préférence de 15 % en masse ou moins,
dans lequel la seconde couche de caoutchouc est composée d'une composition de caoutchouc comprenant un composant de caoutchouc comprenant un caoutchouc à base d'isoprène et a une quantité d'amine B de 10,00 % en masse ou plus, de préférence de 12,00 % en masse ou plus, davantage de préférence de 15,00 % en masse ou plus, dans la teneur d'extraction d'acétone,
dans lequel, lorsqu'une quantité d'amine (% en masse) dans la teneur d'extraction d'acétone de la première couche de caoutchouc est définie comme A, les A et B satisfont B > A, de préférence B/A ≥ 1,1, davantage de préférence B/A ≥ 1,5, encore de préférence B/A ≥ 2,0, et
dans lequel un taux de changement E des modules élastiques complexes E* de la composition de caoutchouc de la première couche de caoutchouc avant et après un test de détérioration à l'ozone pour le pneumatique est de 30 % ou moins, de préférence de 28 % ou moins, davantage de préférence de 26 % ou moins,
dans lequel la teneur d'extraction d'acétone, la quantité d'amine dans la teneur d'extraction d'acétone et le taux de changement E des modules élastiques complexes E* de la composition de caoutchouc de la première couche de caoutchouc avant et après une détérioration à l'ozone sont déterminés par les procédés définis dans la description.

2. Pneumatique selon la revendication 1, dans lequel le composant de caoutchouc de la seconde couche de caoutchouc comprend 45 % en masse ou plus, de préférence 50 % en masse ou plus, davantage de préférence de 55 % en masse ou plus d'un caoutchouc à base d'isoprène.

3. Pneumatique selon la revendication 1 ou 2, dans lequel le composant de caoutchouc de la première couche de caoutchouc comprend 12,5 % en masse ou plus, de préférence 15,0 % en masse ou plus, davantage de préférence 20,0 % en masse ou plus d'un caoutchouc à base d'isoprène.

4. Pneumatique selon l'une quelconque des revendications 1 à 3, dans lequel, lorsque la composition de caoutchouc de la première couche de caoutchouc comprend un antioxydant, une teneur (% en masse) de l'antioxydant dans la composition de caoutchouc étant définie comme C et que la composition de caoutchouc de la seconde couche de caoutchouc comprend un antioxydant, une teneur (% en masse) de l'antioxydant dans la composition de caoutchouc étant définie comme D, D ≥ C est satisfait.

5. Pneumatique selon l'une quelconque des revendications 1 à 4, dans lequel le E est de 25 % ou moins, de préférence de 22 % ou moins.

6. Pneumatique selon l'une quelconque des revendications 1 à 5, dans lequel le A et le B satisfont B-A ≥ 5,00, de préférence B-A ≥ 7,00, davantage de préférence B-A ≥ 10,00, encore de préférence B-A ≥ 11,00, encore de préférence B-A ≥ 13,00.

7. Pneumatique selon l'une quelconque des revendications 1 à 6, dans lequel le C et le D satisfont D-C ≥ 0,50, de préférence D-C ≥ 0,80, davantage de préférence D-C ≥ 1,10, encore de préférence D-C ≥ 1,30, encore de préférence D-C ≥ 1,50.

8. Pneumatique selon l'une quelconque des revendications 1 à 7, dans lequel un rapport F d'une épaisseur de la seconde couche de caoutchouc à une épaisseur de la bande de roulement entière est de 10 à 50 %, de préférence de 15 à 40 %, davantage de préférence de 20 à 30 % à une position d'une ligne centrale de pneumatique de la partie de bande de roulement.

9. Pneumatique selon la revendication 8, dans lequel le A, le B et le F satisfont (B-A) × F ≥ 30, de préférence (B-A) × F ≥ 40, davantage de préférence (B-A) × F ≥ 50, encore de préférence (B-A) × F ≥ 60.

10. Pneumatique selon l'une quelconque des revendications 1 à 9, dans lequel le composant de caoutchouc de la première couche de caoutchouc comprend un caoutchouc de styrène-butadiène.

11. Pneumatique selon l'une quelconque des revendications 1 à 10, dans lequel le composant de caoutchouc de la seconde couche de caoutchouc comprend un caoutchouc de butadiène.

12. Pneumatique selon l'une quelconque des revendications 1 à 11, dans lequel le profil de bande de roulement de la surface de bande de roulement comprend un sillon principal circonférentiel, le sillon principal circonférentiel comprenant au moins un sillon principal circonférentiel externe qui est placé, dans au moins une des deux moitiés de zones de bande de roulement divisées par la ligne centrale de pneumatique, sur un côté externe du pneumatique lorsqu'il est monté sur un véhicule et un sillon principal circonférentiel interne fourni à l'intérieur du sillon principal circonférentiel externe et lorsqu'une largeur de sillon (mm) du sillon principal circonférentiel externe est défini comme G et qu'une largeur de sillon (mm) du sillon principal circonférentiel interne est défini comme H, le G et le H satisfont H < G.

13. Pneumatique selon la revendication 12, dans lequel le G, le H et le H satisfont (H/G) × E ≤ 25, de préférence (H/G) × E ≤ 24, davantage de préférence (H/G) × E ≤ 23, encore de préférence (H/G) × E ≤ 22.

14. Pneumatique selon l'une quelconque des revendications 1 à 13, dans lequel, lorsqu'une zone correspondant à 50 % d'une largeur de sol de bande de roulement avec la ligne centrale de pneumatique centrée est définie comme une surface centrale, dans le profil de bande de roulement de la surface de bande de roulement, une pluralité de lamelles sont formées dans une partie de bord de sillon comprise dans la surface centrale et un angle I formé entre une direction longitudinale de la lamelle et une direction de largeur de pneumatique est de 8° ou plus et de moins de 45°, de préférence de 10° ou plus et de 43° ou moins, davantage de préférence de 15° ou plus et de 41° ou moins, encore de préférence de 20° ou plus et de 40° ou moins.

15. Pneumatique selon la revendication 14, dans lequel le A, le B et le I satisfont (B-A)/I ≥ 0,20, de préférence (B-A)/I ≥ 0,21, davantage de préférence (B-A)/I ≥ 0,22, encore de préférence (B-A)/I ≥ 0,30.
